# EUROPÄISCHE PATENTSCHRIFT

(11) **EP 4 341 612 B1**
(45) Veröffentlichungstag und Bekanntmachung des Hinweises auf die Patenterteilung: **16.07.2025**
(21) Anmeldenummer: 22726587.3
(22) Anmeldetag: 19.05.2022
(51) Int. Cl.: F23C 7/00, F23G 7/06, B01D 53/34

(54) **REKUPERATIVER BRENNER FÜR EINE THERMISCHE PROZESSLUFTBEHANDLUNGSVORRICHTUNG**
RECUPERATIVE BURNER FOR A THERMAL PROCESS AIR TREATMENT DEVICE
BRÛLEUR À RÉCUPÉRATION POUR UN DISPOSITIF DE TRAITEMENT THERMIQUE D'AIR DE TRAITEMENT

(30) Priorität: 21.05.2021 DE 102021113266
(43) Veröffentlichungstag der Anmeldung: 27.03.2024
(73) Patentinhaber: Dürr Systems AG, Stuttgart, 74321 Bietigheim-Bissingen (DE)
(72) Erfinder: BEEH, Björn, 71642 Ludwigsburg (DE); BAUMANN, Thomas, 75175 Pforzheim (DE); MEYER, Sven, 55411 Bingen am Rhein (DE); RIEDER, Erhard, 71083 Herrenberg (DE)
(74) Vertreter: 2SPL Patentanwälte PartG mbB
(86) Internationale Anmeldenummer: PCT/DE2022/100386
(87) Internationale Veröffentlichungsnummer: WO 2022/242806

(56) Entgegenhaltungen:
- DE-A1- 102012 023 257
- DE-A1- 102012 023 257
- DE-A1- 3 014 269
- DE-A1- 3 014 269
- US-A- 6 065 957
- US-A- 6 065 957

## Beschreibung

Die vorliegende Erfindung betrifft einen rekuperativen Brenner für eine thermische Prozessluftbehandlungsvorrichtung, zum Beispiel einsetzbar als thermische, insbesondere rekuperative thermische Abluft- bzw. Abgasreinigungsanlage. Solche thermischen Prozessluftbehandlungsvorrichtungen können vorteilhafterweise in Zusammenhang mit industriellen Produktionsprozessen verwendet werden, bei denen vorwiegend organische Stoffe (z.B. Kohlenwasserstoffe) freigesetzt werden, die durch thermische Oxidation zum Schutz von Menschen und Umwelt behandelt werden müssen. Sie können zum Beispiel zum Reinigen von Schadstoffen aus einer Abluft aus einer Werkstückbearbeitungsanlage (z.B. Lackieranlage von Karosserien), zur Schwachgasverbrennung (z.B. im Deponie- oder Biogas-Umfeld, etc.), zur Erzeugung von Inertgas beispielsweise zur Desorption von Zeolithkonzentratoren, aber auch für verschiedene andere Zwecke oder andere Anlagen verwendet werden.

Beispielsweise müssen Werkstückbearbeitungsanlagen häufig mit einer thermischen Abluftreinigung ausgestattet sein, um die geltenden gesetzlichen Anforderungen zur Abreinigung von Kohlenwasserstoffen aus einer Abluft zum Beispiel aus Trockneranlagen im Rahmen des Immissionsschutzes zu erfüllen. Die meisten bisher bekannten Konzepte zur thermischen Prozessluftbehandlung haben eine Brennkammer, in deren Brennraum eine Oxidation der Prozessluft stattfindet, und einen Brenner zum Gewährleisten der erforderlichen Oxidationstemperatur. Der Brenner ist häufig als rekuperativer Brenner ausgestaltet, bei dem ein Wärmeübertragungssystem integriert ist, um die gesamte Prozessluft oder auch nur Teilströme durch Wärmeübertragung mit dem heißen Rauchgas aus dem Brennraum vorzuheizen, um bei reduziertem Primärenergieverbrauch trotzdem eine erhöhte Brennkammertemperatur zu erhalten. Für die rekuperativen Brenner gibt es auf dem Markt u.a. auch sogenannte Rohrbündelwärmeübertrager, die in den Brenner integriert oder an den Brenner gekoppelt sind und die große Wärmeübertragerflächen realisieren.

Dokument DE 10 2012 023 257 B4 betrifft einen Prozess, bei dem Abgase aus unvollständigen Verbrennungs- oder Ofenvorgängen, Schwelgasen, Deponiegasen, Rauchgasen aus keramischen Ofenprozessen, Gasen aus Hausmüll- oder Biokompostieranlagen, Schwachgasen oder anderen Reduktionsgasen, die Kohlenwasserstoffe enthalten, thermisch nachverbrannt werden. Dies geschieht mithilfe von Luft oder anderen Oxidationsgasen. Sowohl das Reduktionsgas als auch das Oxidationsgas werden auf ihrem Weg zur separaten Zufuhr in die Brennkammer durch heißes, bereits nachverbranntes Reingas rekuperativ erhitzt.

Dokument DE 30 14 269 A1 betrifft eine Verbrennungseinrichtung zur Verbrennung von Störstoffen in Abluft und von Abfallstoffen, insbesondere jedoch die Ausbildung des Wärmetauschers und die konstruktive Ausbildung eines Anströmraumes, in den axial ein Brenner hineinfeuert.

Dokument US 6 065 957 A betrifft eine Katalysator-Verbrennungsvorrichtung mit einem ringförmigen Katalysatorkörper zum katalytischen Verbrennen eines Gemischs aus Kraftstoff und Luft, der in einem Verbrennungszylinder angeordnet ist. Im Verbrennungszylinder sind an einem Ende des Katalysatorkörpers eine Kraftstoffdüse und ein Lufteinlass angeordnet, während am anderen Ende eine Vormischkammer gebildet ist. Der Kraftstoff und die Luft werden von einem Ende des Katalysatorkörpers durch ein in der Mitte des Katalysatorkörpers gebildetes Durchgangsloch zugeführt und in der Vormischkammer gemischt. In der Vormischkammer wird die Fließrichtung des Gemischs zum Katalysatorkörper hin gelenkt. Ein Teil des Abgases wird am einen Ende in die Luft eingeführt.

Inzwischen gibt es in der Industrie etliche Anwendungen, bei denen extrem hohe Prozessluftvolumenströme thermisch behandelt werden müssen. Es ist deshalb die Aufgabe der Erfindung, einen verbesserten rekuperativen Brenner für eine thermische Prozessluftbehandlungsvorrichtung zu schaffen, der auch für hohe Prozessluftvolumenströme mit einer guten Wärmeübertragungsfunktion des heißen Rauchgases auf die zu behandelnde Prozessluft eingesetzt werden kann.

Diese Aufgabe wird gelöst durch einen rekuperativen Brenner für eine thermische Prozessluftbehandlungsvorrichtung mit den Merkmalen des unabhängigen Anspruchs 1. Besonders vorteilhafte Ausgestaltungen und Weiterbildungen der Erfindung sind Gegenstand der abhängigen Ansprüche.

Der rekuperative Brenner für eine thermische Prozessluftbehandlungsvorrichtung, die eine Brennkammer mit einem Brennraum darin zum thermischen Behandeln einer

Prozessluft aufweist, ist ausgestaltet zum Einleiten einer zu behandelnden Prozessluft in den Brennraum der Brennkammer und zum Ausleiten eines durch thermisches Behandeln der Prozessluft entstehenden Rauchgases aus dem Brennraum der Brennkammer mit einer Wärmeübertragung vom ausleitenden Rauchgas auf die einleitende Prozessluft. Der rekuperative Brenner hat einen Anschlusssektor, der wenigstens einen Prozessluft-Eingangskanal zum Einnehmen der Prozessluft und wenigstens einen Rauchgas-Ausgangskanal zum Ausgeben des Rauchgases aufweist; und einen Wärmeübertragungssektor, der einen an den Anschlusssektor angebrachten Eingangsverteiler und ein dem Brennraum der Brennkammer zugewandtes Halterungselement aufweist, zwischen denen sich ein Innenraum befindet, in dem mehrere Prozessluftrohre vom Eingangsverteiler zum Halterungselement verlaufen, um die Prozessluft vom Anschlusssektor zum Brennraum zu leiten, wobei die Prozessluftrohre durch den Eingangsverteiler hindurch an den wenigstens einen Prozessluft-Eingangskanal des Anschlusssektors (direkt oder indirekt) angekoppelt sind und durch das Halterungselement hindurch in Richtung zum Brennraum offen sind. Gemäß der Erfindung hat der rekuperative Brenner außerdem wenigstens ein Rauchgasrohr zum Ausleiten des Rauchgases aus dem Brennraum, wobei das wenigstens eine Rauchgasrohr eine offene Eingangsöffnung im Brennraum aufweist und durch das Halterungselement des Wärmeübertragungssektors in den Wärmeübertragungssektor hinein verläuft und im Abschnitt innerhalb des Wärmeübertragungssektors wenigstens eine Rohrwandöffnung zum Einleiten des Rauchgases in den von den Prozessluftrohren durchlaufenen Innenraum des Wärmeübertragungssektors zwecks Wärmeübertragung vom ausleitenden Rauchgas auf die einleitende Prozessluft aufweist. Der Innenraum des Wärmeübertragungssektors ist in seinem dem Anschlusssektor zugewandten Endbereich an den wenigstens einen Rauchgas-Ausgangskanal (direkt oder indirekt) angekoppelt ist, um das Rauchgas aus dem Wärmeübertragungssektor und aus dem Brenner auszuleiten.

Während bei herkömmlichen Prozessluftbehandlungsvorrichtungen mit einer Rauchgaseinfuhr aus dem Brennraum von außen in den Wärmeübertragungssektor das heiße Rauchgas im Fall einer größeren Dimension des Wärmeübertragungssektors mit einer größeren Anzahl von Prozessluftrohren, was für die Verarbeitung größerer Prozessluftvolumenströme notwendigerweise eingerichtet wird, nur zu einem Teil der Prozessluftrohre auf jener Sektorenseite der Einfuhröffnung gelangt und damit die Wärmeübertragung nur auf einen Teil der einleitenden Prozessluft erzielt, kann bei der erfindungsgemäßen Konstruktion des rekuperativen Brenners durch das wenigstens eine Rauchgasrohr das heiße Rauchgas aus dem Brennraum von innen in den Wärmeübertragungssektor einströmen, was selbst bei einer größeren Dimension des Wärmeübertragungssektors mit einer größeren Anzahl von Prozessluftrohren dazu führt, dass das Rauchgas zu (fast) allen Prozessluftrohren gelangt und damit eine gleichmäßigere Wärmeübertragung auf die (nahezu) komplette einleitende Prozessluft gewährleistet. Der erfindungsgemäße rekuperative Brenner ist somit auch für die Behandlung größerer Prozessluftvolumenströme von zum Beispiel einigen 10.000 Nm³/h und auch bis weit über 100.000 Nm³/h geeignet, da die erforderliche Wärmeübertragung vom heißen Rauchgas auf die einleitende Prozessluft auch bei entsprechend größerer Dimensionierung des Brenners und seines Wärmeübertragungssektors gewährleistet werden kann. Der erfindungsgemäße rekuperative Brenner ist aber selbstverständlich auch für Applikationen mit niedrigeren Prozessluftvolumenströmen, zum Beispiel im Bereich von nur wenigen 1.000 Nm³/h, in vorteilhafter Weise einsetzbar.

Das Rauchgasrohr hat vorzugsweise mehrere Rohrwandöffnungen an verschiedenen Seiten des Rohres und/oder mehrere Rohrwandöffnungen an verschiedenen Längsstellen des Rohres, wodurch das heiße Rauchgas noch stärker verteilt in den Innenraum des Wärmeübertragungssektors eingeleitet wird, was bei einer größeren Dimension des Wärmeübertragungssektors mit einer größeren Anzahl von Prozessluftrohren noch effektiver dazu führt, dass das Rauchgas zu (fast) allen Prozessluftrohren gelangt und damit eine gleichmäßigere Wärmeübertragung auf die (nahezu) komplette einleitende Prozessluft gewährleistet. Die Querschnittsform und die Dimensionierung des Rauchgasrohres sind grundsätzlich beliebig (d.h. nicht zwingend rund, und wahlweise in der Laufrichtung variabel (z.B. leicht konisch) und können zum Beispiel je nach Anwendungsfall an die erforderlichen Prozessluftmengen und Temperaturwerte frei angepasst werden. Das Rauchgasrohr kann auch mit im Wesentlichen derselben Strukturierung (Durchmesser und/oder Querschnittsform und/oder Material) wie die Prozessluftrohre des Wärmeübertragungssektors ausgebildet sein, was vorteilhafterweise eine sehr kompakte Struktur des Wärmeübertragungsektors ermöglicht, und wobei dies bei Vorhandensein mehrerer Rauchgasrohre besonders vorteilhaft ist.

In einer möglichen Ausführungsvariante der Erfindung hat der Brenner nur ein einzelnes Rauchgasrohr, das dann bevorzugt im Wesentlichen zentrisch positioniert ist (außer die Zentrale wird anders genutzt, zum Beispiel von einer Zusatzmittelrohr, wie später erläutert). Vorzugsweise können mehrere Rauchgasrohre zum Ausleiten des Rauchgases aus dem Brennraum vorgesehen sein, die jeweils durch das Halterungselement des Wärmeübertragungssektors in den Wärmeübertragungssektor hinein verlaufen und im Abschnitt innerhalb des Wärmeübertragungssektors wenigstens eine Rohrwandöffnung zum Einleiten des Rauchgases in den Innenraum des Wärmeübertragungssektors zwecks Wärmeübertragung vom ausleitenden Rauchgas auf die einleitende Prozessluft aufweisen, wobei die mehreren Rauchgasrohre im Querschnitt des Wärmeübertragungssektors bevorzugt symmetrisch verteilt sind. Durch den Einbau von mehreren Rauchgasrohren können die oben erläuterten Vorteile noch effektiver erzielt werden. Falls mehrere Rauchgasrohre vorhanden sind, können optional alle Rauchgasrohre oder Gruppen mehrerer Rauchgasrohre jeweils einen gemeinsamen Eingangsabschnitt mit einer einzelnen Eingangsöffnung für das Rauchgas haben.

Der Wärmeübertragungssektor des rekuperativen Brenners ist in diesem Zusammenhang als ein räumlich begrenzter, insbesondere mit bestimmter Länge und im Umfang durch Wandungen abgegrenzter Abschnitt eines Raums, Rohrs, Kanals, etc. zu verstehen. Der Eingangsverteiler des Wärmeübertragungssektors bezeichnet in diesem Zusammenhang die Abgrenzung des Wärmeübertragungssektors an dessen Stirnseite zum Anschlusssektor, und das Halterungselement des Wärmeübertragungssektors bezeichnet in diesem Zusammenhang die Abgrenzung des Wärmeübertragungssektors an dessen Stirnseite zum Brennraum, wobei der Eingangsverteiler und/oder das Halterungselement diesbezüglich je nach Ausführungsform des rekuperativen Brenners auch in den Anschlusssektor bzw. den Brennraum hineinragen oder innerhalb des Anschlusssektors bzw. des Brennraums angeordnet sein können. Der Wärmeübertragungssektor ist an seiner Außenumfangsseite grundsätzlich geschlossen und vorzugsweise auch an wenigstens einer seiner beiden Stirnseiten abgedichtet (zum Beispiel bevorzugt am Eingangsverteiler, aber nicht zwingend am Halterungselement). Das Halterungselement des Wärmeübertragungssektors an seiner dem Brennraum zugewandten Stirnseite dient im Wesentlichen der Positionierung der Prozessluftrohre zueinander und kann in diesem Zusammenhang dichtschließend strukturiert sein oder Öffnungen aufweisen oder komplett offen sein. Die durch den Wärmeübertragungssektor verlaufenden Prozessluftrohre sind an ihren Enden durch die Stirnseiten des Wärmeübertragungssektors hindurch mit dem Anschlusssektor des Brenners bzw. dem Brennraum der Brennkammer vorzugsweise derart verbunden, dass die Prozessluft durch den Wärmeübertragungssektor im Wesentlichen nur innerhalb der Prozessluftrohre vom Prozessluft-Eingangskanal des Anschlusssektors zum Brennraum der Brennkammer strömt und das Rauchgas durch den Wärmeübertragungssektor möglichst nur außerhalb der Prozessluftrohre aus dem Rauchgasrohr zum Rauchgas-Ausgangskanal des Anschlusssektors strömt. Der Wärmeübertragungssektor hat bevorzugt eine im Wesentlichen kreisförmige oder elliptische oder polygonale (z.B. rechteckige, hexagonale, oktogonale) Querschnittsform, die strömungstechnische Vorteile liefert. Bei einer größeren Dimensionierung des Brenners wird der Wärmeübertragungssektor vorzugsweise nur in einer (d.h. nicht in allen) Querschnittsrichtung erweitert, sodass er vorzugsweise eine elliptische (d.h. nicht kreisförmige) oder rechteckförmige (d.h. nicht quadratische) Querschnittsform hat. Auf diese Weise entsteht auch bei größeren Wärmeübertragungssektoren mit mehr Prozessluftrohren (wegen Erfordernis höherer Prozessluftvolumenströme) eine besser / gleichmäßiger verteilte Einfuhr des Rauchgases aus dem Brennraum in den Wärmeübertragungssektor und auch mit konstant bleibenden Einströmgeschwindigkeiten. Die Querschnittsform des Rauchgasrohres ist grundsätzlich beliebig, beispielsweise im Wesentlichen kreisförmig. Bei der Herstellung des rekuperativen Brenners gemäß der Erfindung können die Längen des Wärmeübertragungssektors und seiner Prozessluftrohre variabel ausgebildet werden, um so den Brenner und damit auch die entsprechende Prozessluftbehandlungsvorrichtung je nach Anwendungsfall an Temperaturerfordernisse der Prozessluft und des Rauchgases anzupassen.

Der Wärmeübertragungssektor mit den Prozessluftrohren kann auch als Rohrbündelwärmeübertrager bezeichnet werden, der für den Fachmann bekanntermaßen große Wärmeübertragungsflächen bietet. Die vorliegende Erfindung ist in diesem Zusammenhang aber nicht auf spezielle Strukturen oder Dimensionen der Prozessluftrohre eines Rohrbündelwärmeübertragers eingeschränkt. Beispielsweise können die Prozessluftrohre aber auch bei der vorliegenden Erfindung gestauchte (d.h. unrunde) Profile und integrierte Abstandshalter dazwischen haben. Vorteilhafterweise können die Prozessluftrohre im Wärmeübertragungssektor zumindest abschnittsweise parallel ausgerichtet angeordnet sein. Dabei können sie zumindest abschnittsweise geradlinig, axial und/oder radial gekrümmt ausgebildet sein. Für eine einfache Montage sind die Prozessluftrohre dabei vorzugsweise mit gleichmäßigen Abständen zu jeweils benachbarten Prozessluftrohren angeordnet. Es kann jedoch insbesondere strömungstechnisch auch vorteilhaft sein, wenn die Prozessluftrohre innerhalb des Wärmeübertragungssektors, insbesondere über einen Querschnitt des Wärmeübertragungssektors in einem ausgewählten Muster um das Rauchgasrohr angeordnet sind. Ein bevorzugtes Muster kann dabei mit zunehmendem Abstand vom Rauchgasrohr variieren, beispielsweise nach außen hin zunehmen oder abnehmen. In einer anderen Ausführungsvariante kann vorgesehen sein, radial weiter außen liegende Prozessluftrohre um einen bestimmten Umfangswinkel versetzt zu weiter innen liegenden Prozessluftrohren anzuordnen. In einer besonders bevorzugten Ausführungsvariante sind die Prozessluftrohre in der Art einer Fibonacci-Reihe um das Rauchgasrohr angeordnet. In einer anderen Ausführungsvariante könne sich die Prozessluftrohre zumindest abschnittsweise kreis-, kreisbogen-, ellipsen- oder spiralartig entlang des Rauchgasrohres erstrecken, um auf diese Weise die Effizienz und/oder Gleichmäßigkeit der Wärmeübertragung zu erhöhen und/oder eine Anströmung der Prozessluftrohre mit Rauchgas zu verbessern, insbesondere zu vergleichmäßigen.

In einer Ausgestaltung der Erfindung weist der Wärmeübertragungssektor des rekuperativen Brenners in seinem dem Brennraum zugewandten Endbereich in seinem Außenumfangsbereich ferner wenigstens eine zusätzliche Einführöffnung zum Einleiten des Rauchgases aus dem Brennraum in den von den Prozessluftrohren durchlaufenen Innenraum des Wärmeübertragungssektors auf. Durch diese Maßnahme kann das Rauchgas in Querschnittsorientierung von innen und von außen in den Innenraum des Wärmeübertragungssektors eingeleitet werden, sodass das heiße Rauchgas noch sicherer zu (fast) allen Prozessluftrohren gelangt und damit eine gleichmäßigere Temperaturverteilung und Wärmeübertragung auf die (nahezu) komplette einleitende Prozessluft gewährleistet sowie noch sicherer Temperaturhotspots und damit verbundene Materialbelastungen vermeidet. Die zusätzliche äußere Einführöffnung kann zum Beispiel im Randbereich des Halterungselements oder in der Außenumfangswand des Wärmeübertragungssektors vorgesehen sein.

In einer Ausgestaltung der Erfindung weist der rekuperative Brenner ferner ein Flammrohr auf, das an der dem Innenraum abgewandten Seite des Halterungselements des Wärmeübertragungssektors vorgesehen ist (z.B. als Teil des Halterungselements oder als separate Komponente angebracht an das Halterungselement), um die Prozessluft über das Flammrohr in den Brennraum einzuleiten, wobei das Rauchgasrohr durch dieses Flammrohr und durch das Halterungselement des Wärmeübertragungssektors in den Wärmeübertragungssektor hinein verläuft. Das Flammrohr verbessert im Vergleich zu einem direkten Anliegen des Brennraums am Halterungselement des Wärmeübertragungssektors eine gleichmäßige Prozessluftzufuhr aus den Prozessluftrohren in den Brennraum und eine zielgerichtete thermische Behandlung der Prozessluft im Brennraum. Das Flammrohr erzielt erhöhte Geschwindigkeiten, höhere Turbulenz und somit verbesserte Durchmischung der Ströme (Prozessluft, Brennstoff, ggf. Brennluftgemisch, ggf. Zusatzmittel) aus dem Wärmeübertragungssektor, wodurch eine Verbrennung bei gleichzeitig geringen Nox-Emissionen realisiert werden kann. Zudem wird durch das Flammrohr eine Mindestverweilzeit der Prozessluft gewährleistet, die für die Reaktionen erforderlich ist. Bei der Ausgestaltung des rekuperativen Brenners mit der zusätzlichen äußeren Einführöffnung wäre diese dann außerhalb des Flammrohres im Halterungselement positioniert und über einen Abführspalt zwischen dem Brennkammergehäuse und der Außenwand des Anschlussrohres zugänglich oder, falls in Außenumfangswand des Wärmeübertragungssektors, über einen Abführspalt zwischen dem Brennkammergehäuse und der Außenwand des Anschlussrohres und weiter der Außenwand des Wärmeübertragungssektors zugänglich.

In einer Ausgestaltung der Erfindung ragt das Rauchgasrohr nur entlang eines Teilabschnitts in den Wärmeübertragungssektor hinein und weist eine geschlossene Rohrendwand auf. Auf diese Weise wird das heiße Rauchgas nur im dem Brennraum zugewandten Bereich des Wärmeübertragungssektors aus dem Rauchgasrohr in den Innenraum des Wärmeübertragungssektors eingeleitet und dann im dem Anschlusssektor zugewandten Bereich des Wärmeübertragungssektors aus dem Innenraum zum Rauchgas-Ausgangskanal ausgeleitet.

In einer anderen Ausgestaltung der Erfindung verläuft das Rauchgasrohr durch den gesamten Wärmeübertragungssektor bis zum Eingangsverteiler und weist eine geschlossene Rohrendwand auf. In diesem Fall ist wenigstens eine der wenigstens einen Rohrwandöffnung zum Einleiten des Rauchgases in den Innenraum des Wärmeübertragungssektors in der dem Anschlusssektor zugewandten Hälfte des Wärmeübertragungssektors angeordnet und weist der Wärmeübertragungssektor in seinem dem Anschlusssektor zugewandten Endbereich an seinem Außenumfang wenigstens eine Ausführöffnung auf, die an den wenigstens einen Rauchgas-Ausgangskanal angekoppelt ist. Das Rauchgasrohr kann nur in der dem Anschlusssektor zugewandten Hälfte des Wärmeübertragungssektors wenigstens eine Rohrwandöffnung aufweisen oder optional zusätzlich auch in der dem Brennraum zugewandten Hälfte des Wärmeübertragungssektors wenigstens eine Rohrwandöffnung aufweisen, jeweils zum Einleiten des heißen Rauchgases in den Innenraum des Wärmeübertragungssektors.

In einer noch anderen Ausgestaltung der Erfindung verläuft das Rauchgasrohr durch den gesamten Wärmeübertragungssektor und durch den Eingangsverteiler hindurch und weist zwischen dem Bereich des Halterungselements und dem Bereich des Eingangsverteilers eine Rohrtrennwand auf, um einen dem Halterungselement zugewandten Einleitabschnitt und einen dem Eingangsverteiler zugewandten Ausleitabschnitt zu bilden, wobei der Ausleitabschnitt an den wenigstens einen Rauchgas-Ausgangskanal angekoppelt ist, wobei die wenigstens eine Rohrwandöffnung zum Einleiten des Rauchgases in den Innenraum des Wärmeübertragungssektors im Einleitabschnitt angeordnet ist, und wobei das Rauchgasrohr in seinem Ausleitabschnitt wenigstens eine weitere Rohrwandöffnung zum Ausleiten / Wiederaufnehmen des Rauchgases aus dem Innenraum des Wärmeübertragungssektors in das Rauchgasrohr aufweist. Das Rauchgasrohr kann in dieser Ausführungsvariante bevorzugt einteilig mit dem Rauchgas-Ausgangskanal konstruiert sein.

Optional umfasst der rekuperative Brenner ferner (i) wenigstens einen Aktuator, der ausgestaltet und angeordnet ist, um den Rauchgas-Ausgangskanal wahlweise zumindest etwas zu sperren; und/oder (ii) wenigstens einen Aktuator, der ausgestaltet und angeordnet ist, um wenigstens einen des wenigstens einen Rauchgasrohres wahlweise zumindest etwas zu sperren. Alternativ oder zusätzlich umfasst der rekuperative Brenner optional ferner (iii) wenigstens einen Variator, der ausgestaltet und angeordnet ist, um den Zugang zu wenigstens einer der wenigstens einen Rohrwandöffnung des Rauchgasrohres (zum Einleiten des Rauchgases aus dem Rauchgasrohr in den Innenraum des Wärmeübertragungssektors) wahlweise zumindest etwas einzuschränken; und/oder (iv) wenigstens einen Variator, der ausgestaltet und angeordnet ist, um den Zugang zu wenigstens einer der wenigstens einen weiteren Rohrwandöffnung des Rauchgasrohres (zum Ausleiten des Rauchgases aus dem Innenraum des Wärmeübertragungssektors zurück in das Rauchgasrohr), falls vorhanden, wahlweise zumindest etwas einzuschränken; und/oder (v) wenigstens einen Variator, der ausgestaltet und angeordnet ist, um den Zugang zu wenigstens einer der wenigstens einen zusätzlichen Einführöffnung in den Innenraum des Wärmeübertragungssektors (in seinem Außenumfangsbereich), falls vorhanden, wahlweise zumindest etwas einzuschränken; und/oder (vi) wenigstens einen Variator, der ausgestaltet und angeordnet ist, um die Rohrtrennwand zwischen dem Einleitabschnitt und dem Ausleitabschnitt des Rauchgasrohres, falls vorhanden, wahlweise zumindest etwas zu öffnen. Durch die Aktuatoren kann jeweils geregelt werden, wieviel Rauchgas durch das Rauchgasrohr und den Wärmeübertragungssektor strömt, und durch die Variatoren kann jeweils geregelt werden, wieviel Rauchgas in den Innenraum des Wärmeübertragungssektors gelangt. Durch diese optionalen Elemente kann somit jeweils vorteilhafterweise der Rekuperationsgrad des Wärmeübertragungssektors eingestellt / geregelt werden. Die genannten Aktuatoren können jeweils zum Beispiel manuell, elektrisch, pneumatisch, elektromagnetisch und/oder hydraulisch einstellbar sein, und die Aktuatoren können jeweils zum Beispiel so konfiguriert sein, dass das zumindest teilweise Sperren des Rauchgas-Ausgangskanals bzw. des Rauchgasrohres durch ein axiales Verschieben des Aktuators oder mittels eines drehbaren Elements mit Löchern, Klappen, etc. erfolgt. Die Variatoren können jeweils zum Beispiel ebenfalls manuell, elektrisch, pneumatisch, elektromagnetisch und/oder hydraulisch einstellbar sein, und die Variatoren können jeweils zum Beispiel axial verschiebbar sein oder drehbar sein.

In einer Ausgestaltung der Erfindung kann der Wärmeübertragungssektor an einer Stelle zwischen dem Halterungselement und dem Eingangsverteiler an seinem Außenumfang wenigstens eine Ableitöffnung zum Ausführen eines Teils des Rauchgases aus dem Innenraum des Wärmeübertragungssektors in einen Rauchgasableitkanal aufweisen (d.h. vor der Ausleitung des Rauchgases aus dem Innenraum des Wärmeübertragungssektors zum Rauchgas-Ausgangskanal des Anschlusssektors). Auf diese Weise wird in den Rauchgasableitkanal eine Rauchgasteilmenge ausgeführt, die weniger abgekühlt ist als das in den Rauchgas-Ausgangskanal des Anschlusssektors ausgeführte Rauchgas, sodass bei Bedarf vom Rauchgas stromab der Prozessluftbehandlungsvorrichtung an anderen Stellen (z.B. Wärmeübertragern einer Werkstückbearbeitungsanlage, Wärmebereitstellung für Wärmeträgerfluidsystem, Wärmebereitstellung zur Erzeugung elektrischer Energie, etc.) mehr Wärme übertragen werden kann und zu diesem Zweck auch eine zusätzliche Heißgasableitung aus der Brennkammer der Prozessluftbehandlungsvorrichtung entfallen kann. Außerdem wird durch diese Rauchgasteilableitung die Temperatur der Prozessluftrohre im Bereich nahe dem Anschlusssektor reduziert, sodass die Prozessluftrohre vorzugsweise im Bereich zwischen der Ableitöffnung und dem Anschlusssektor zumindest teilweise aus einem weniger hitzebeständigen Material (z.B. preisgünstigerer Edelstahl) gefertigt sein können, sodass die Herstellungskosten für die Prozessluftrohre und damit auch für den gesamten rekuperativen Brenner reduziert werden können. Die Ableitöffnung ist zudem vorzugsweise mit einem Durchflussregler zum wahlweisen Einstellen einer Rauchgasableitmenge ausgestattet. Durch die damit ermöglichte Regelung der Rauchgasableitmenge können die Temperatur im dem Anschlusssektor zugewandten Wärmeübertragungssektorenbereich und auch die Temperatur des abgeleiteten Rauchgases je nach Anwendungsbedarf geregelt werden.

In einer Ausgestaltung der Erfindung kann der Wärmeübertragungssektor in seinem Innenraum zusätzlich mehrere Strömungsleitstrukturen in Form von zum Beispiel Umlenkbleche enthalten, die jeweils quer zu den Prozessluftrohren ausgerichtet sind und jeweils Durchgangsöffnungen zum Hindurchführen der Prozessluftrohre haben, wobei die mehreren Umlenkbleche in der Laufrichtung der Prozessluftrohre voneinander beabstandet sind und in der Richtung quer zur Laufrichtung der Prozessluftrohre zueinander versetzt sind. Durch diese Umlenkbleche wird das in den Innenraum des Wärmeübertragungssektors eingeleitete Rauchgas entlang der Längsrichtung des Wärmeübertragungssektors hin und her umgelenkt, sodass es zu allen Prozessluftrohren im äußeren Bereich und im inneren Bereich des Wärmeübertragungssektors gelangt. Bei dieser Ausgestaltung hat das Rauchgasrohr die wenigstens eine Rohrwandöffnung zum Einleiten des Rauchgases in den Innenraum vorzugsweise im dem Halterungselement zugewandten Endbereich des Wärmeübertragungssektors. Die Ausrichtung der Umlenkbleche ist grundsätzlich in einem beliebigen Winkel zur Laufrichtung der Prozessluftrohre (d.h. nicht zwingend senkrecht), vorzugsweise wenigstens etwa 45 Grad zur Laufrichtung der Prozessluftrohre.

In einer Ausgestaltung der Erfindung weist der Anschlusssektor ferner wenigstens einen Brennstoff-Eingangskanal zum Einnehmen eines Brennstoffes (z.B. Erdas) und einen Vormischraum zum Mischen der Prozessluft und des Brennstoffes zu einem Brennluftgemisch auf, wobei die Prozessluftrohre des Wärmeübertragungssektors durch den Eingangsverteiler hindurch an den Vormischraum angekoppelt sind, um das Brennluftgemisch vom Anschlusssektor zum Brennraum zu leiten. Durch das Vormischen der Prozessluft mit Brennstoff ist eine Entzündung des Brennluftgemisches beim Eintritt in Brennraum ohne zusätzlichen Zünder möglich. Dies vereinfacht die Konstruktion der Brennkammer und auch des Brenners. Der Brennraum kann zu diesem Zweck in einfacher Weise durch eine Heizvorrichtung (z.B. einer elektrischen oder elektromagnetischen Aufheizvorrichtung oder einer schaltbaren Hochtemperatur-Wärmequelle anderer Art) mit Wärmeenergie versorgt werden, sodass das durch den Wärmeübertragungssektor vorgeheizte Brennluftgemisch dann sofort eine Verbrennungstemperatur erreicht. Bei dieser Ausführungsvariante werden vorzugsweise ein oder mehr Sicherheitsmaßnahmen vorgenommen, um eine Zündung des Brennluftgemisches im Vormischraum des Anschlusssektors sicher zu verhindern. Eine Sicherheitsmaßnahme kann darin bestehen, dass der Anschlusssektor ferner wenigstens eine Temperaturerfassungsvorrichtung (z.B. Temperatursensor wie beispielsweise Thermoelement, IR-Sensor, Pyrometer, etc.) zum Erfassen einer Temperatur des Brennluftgemisches im Vormischraum aufweist. Wenn durch die Temperaturerfassungsvorrichtung eine zu hohe Temperatur erkannt wird, kann eine Zündung im Vormischraum durch Sperren der Prozessluftversorgung und der Brennstoffversorgung und dann Ausblasen des restlichen Brenngasgemisches im Vormischraum durch den Wärmeübertragungssektor in den Brennraum verhindert werden. Außerdem sind die Prozessluftrohre am Eingangsverteiler des Wärmeübertragungssektors vorzugsweise jeweils abgedichtet fixiert, wodurch ein Einströmen des Rauchgases aus dem Innenraum des Wärmeübertragungssektors in den Vormischraum des Anschlusssektors verhindert und damit eine Temperatursteigerung und damit eine Zündung im Vormischraum sicherer verhindert werden kann. Eine weitere Sicherheitsmaßnahme kann darin bestehen, dass die Prozessluftrohre an ihrem dem Brennraum zugewandten Ende jeweils verjüngt ausgestaltet sind, wodurch die Prozessluft im Winkel in Richtung zum Brennraum geleitet wird und durch diesen Drall eine Rückleitung des heißen Rauchgases aus dem Brennraum in die Prozessluftrohre verhindert und damit eine dynamische Flammensperre zum sicheren Verhindern einer Temperatursteigerung und damit einer Zündung im Vormischraum erzeugt werden kann.

In einer anderen Ausgestaltung der Erfindung weist der Anschlusssektor ferner wenigstens einen Brennstoff-Eingangskanal zum Einnehmen eines Brennstoffes (z.B. Wasserstoff) auf und weist der Brenner ferner wenigstens ein Brennstoffrohr auf, das an den wenigstens einen Brennstoff-Eingangskanal (direkt oder indirekt) angekoppelt ist und entweder (i) zwischen den Prozessluftrohren oder (ii) innerhalb eines Prozessluftrohrs durch den Innenraum des Wärmeübertragungssektors verläuft, um den Brennstoff getrennt zur Prozessluft vom Anschlusssektor in den Brennraum zu leiten. Durch die separate Zufuhr des Brennstoffes zum Brennraum kann eine Entzündung schon innerhalb des Wärmeübertragungssektors verhindert werden und kann deshalb anstatt Erdgas zum Beispiel auch Wasserstoff (mit höherer Reaktivität) als Brennstoff benutzt werden, ohne dass eine höhere Strömungsgeschwindigkeit erforderlich ist, um eine Entzündung schon im Wärmeübertragungssektor zu verhindern, da der Wasserstoff nicht alleine entzündet wird, sondern erst bei der Vermischung mit der Prozessluft nach dem Ausströmen aus dem Wärmeübertragungssektor zum Brennraum. Das separate Brennstoffrohr ist (in beiden Varianten) vorzugsweise nicht oder nur unerheblich länger als die Prozessluftrohre, sodass der Wasserstoff nach dem Ausströmen aus dem Brennstoffrohr nicht zunächst alleine heiß wird (wodurch Stickoxide entstehen können), sondern sofort von der ausströmenden Prozessluft beströmt wird, wodurch die Erzeugung von Stickoxiden verhindert oder zumindest reduziert wird und dadurch Emissionswerte vermindert werden können. Das Brennstoffrohr kann optional zumindest etwas thermisch isoliert ausgestaltet sein, um den jeweiligen Brennstoff bei Bedarf ohne oder zumindest mit weniger Aufheizen durch das Rauchgas zum Brennraum zu leiten. Zum Beispiel kann so auch bei Verwendung eines sehr leicht entzündlichen Brennstoffes eine vorzeitige Entzündung vermieden werden.

Die beiden vorgenannten Ausgestaltungen der Erfindung mit einem Vormischraum bzw. einem Brennstoff-Eingangskanal können wahlweise auch miteinander kombiniert werden. Auf diese Weise können zum Beispiel zwei verschiedene Brennstoffe in den Brennraum geleitet werden, beispielsweise Erdgas über den Vormischraum und die Prozessluftrohre und Wasserstoff über das wenigstens eine Brennstoffrohr. Diese Nutzung von verschiedenen Brennstoffen kann sowohl gemeinsam in einer Anwendung oder einzeln in verschiedenen Anwendungen durchgeführt werden.

In einer noch anderen Ausgestaltung der Erfindung weist der Anschlusssektor keinen Brennstoff-Eingangskanal zum Einnehmen eines Brennstoffes auf, sodass durch den rekuperativen Brenner kein Brennstoff in den Brennraum der Brennkammer geleitet wird. Diese Ausgestaltung ist anwendbar bei Ausführungsformen der thermischen Prozessluftbehandlungsvorrichtung, bei denen die Brennkammer eine eigene Brennstoffzufuhr aufweist, die wahlweise auch mit einem Zündmechanismus kombiniert sein kann.

In einer weiteren Ausgestaltung der Erfindung kann der Anschlusssektor ferner wenigstens einen Zusatzmittel-Eingangskanal zum Einnehmen eines Zusatzmittels (z.B. Zündmittel oder weitere Prozessmedien) aufweisen und der Brenner ferner wenigstens ein Zusatzmittelrohr aufweisen, das an den wenigstens einen Zusatzmittel-Eingangskanal (direkt oder indirekt) angekoppelt ist und neben den Prozessluftrohren durch den Wärmeübertragungssektor verläuft, um zusätzlich zur Prozessluft ein Zusatzmittel in die Brennkammer zu leiten.

In einer weiteren Ausgestaltung der Erfindung können die Prozessluftrohre jeweils lose in das Halterungselement des Wärmeübertragungssektors eingekoppelt sein. Durch diese Maßnahme können sich die Prozessluftrohre bei einer Längendehnung aufgrund eines Temperatureinflusses individuell durch das Halterungselement in den Brennraum schieben.

Falls der rekuperative Brenner auch ein Flammrohr zum Einleiten der Prozessluft in den Brennraum der Brennkammer aufweist, wie oben erläutert, weisen das Flammrohr und/oder das Rauchgasrohr vorzugsweise Außenumfangswände auf, die derart ausgestaltet und ausgerichtet sind, dass der vom Flammrohr eingeschlossene Raum in Richtung vom Halterungselement des Wärmeübertragungssektors zum Brennraum der Brennkammer erweitert wird (was auch als Diffusor bezeichnet werden kann). Diese Ausführungsvariante ist besonders vorteilhaft bei der Ausführungsform mit den lose in das Halterungselement des Wärmeübertragungssektors eingekoppelten Prozessluftrohren. Durch die Erweiterung des Raums in Richtung zum Brennraum wird der Druck in Richtung zum Brennraum im Verhältnis zum Druck nahe dem Halterungselement erhöht, sodass der Druckunterschied zwischen innerhalb und außerhalb des Innenraums des Wärmeübertragungssektors vermindert wird und damit ein unmittelbares Rückströmen der Prozessluft oder des Brennluftgemisches aus den Prozessluftrohren durch die Spalten im Halterungselement um die Prozessluftrohre in den Innenraum des Wärmeübertragungssektors und damit ein Vermischen mit dem Rauchgas vermieden werden kann.

In einer weiteren Ausgestaltung der Erfindung weist das Halterungselement des Wärmeübertragungssektors vorzugsweise neben den Prozessluftrohren wenigstens eine Zusatzöffnung auf, in der ein Draller zum schrägen Rückleiten von Gas (Rauchgas, Prozessluft, Brennluftgemisch) aus dem Innenraum des Wärmeübertragungssektors in das Flammrohr angeordnet ist. Durch eine solche Rezirkulation des Gases in den Brennraum wird die thermische Prozessluftbehandlung nochmals durchgeführt, was insbesondere wichtig ist, falls ein Teil der Prozessluft ohne Behandlung in den Innenraum des Wärmeübertragungssektors zurückströmt. Diese Ausführungsvariante ist besonders vorteilhaft bei der ausführungsform mit einer Diffusor-Variante des Flammrohres.

Alternativ oder zusätzlich kann zumindest eine Teilmenge der Prozessluftrohre auch einen Flammenstabilisator aufweisen, beispielsweise in Form eines außenliegenden Ringes nach ihrer Austrittsöffnung.

In einer weiteren Ausgestaltung der Erfindung weist der Anschlusssektor wenigstens eine Ventilvorrichtung zum wahlweisen Öffnen oder Schließen und optional auch zum Drosseln eines jeweiligen Eingangskanals (Prozessluft / Brennstoff / Zusatzmittel) zum Einschalten oder Ausschalten des Brennerbetriebs und Beeinflussen der zu verarbeitenden Prozessluftmenge auf. Im Fall mehrerer Ventilvorrichtungen, insbesondere auch im Fall mehrerer Ventilvorrichtungen für die gleiche Eingangskanalart, sind diese bevorzugt unabhängig voneinander ansteuerbar.

In einer noch weiteren Ausgestaltung der Erfindung kann der rekuperative Brenner ferner eine Differenzdruckmessvorrichtung über den Wärmeübertragungssektor aufweisen. Auf Basis der Differenzdruckmessung können Verunreinigungen im Wärmeübertragungssektor erkannt werden und so Reinigungsprozesse geplant / initiiert werden.

Bei dem erfindungsgemäßen rekuperativen Brenner kann der Wärmeübertragungssektor optional auch aus mehreren Wärmeübertragungssektorensegmenten bestehen, wobei die mehreren Wärmeübertragungssektorensegmente jeweils wenigstens ein Rauchgasrohr beinhalten und/oder wenigstens ein Rauchgasrohr zwischen wenigstens zwei Wärmeübertragungssektorensegmenten angeordnet ist. Die mehreren (d.h. zwei oder mehr) Wärmeübertragungssektorensegmente können zum Beispiel koaxial zueinander ausgestaltet und angeordnet sein oder nebeneinander angeordnet sein. Die mehreren Wärmeübertragungssektorensegmente sind vorzugsweise jeweils mit eigenen Eingangskanälen verkoppelt und unabhängig voneinander ansteuerbar (zum Beispiel durch die oben genannten Ventilvorrichtungen), sodass eine Aufteilung der Prozessluftströmungsmenge auf die mehreren Wärmeübertragungssektorensegmente flexibel geregelt und auf diese Weise der rekuperative Brenner mehrstufig betrieben werden kann.

Alle oben erläuterten Ausgestaltungen des rekuperativen Brenners sind im Rahmen der Erfindung nahezu beliebig kombinierbar.

Gegenstand der Erfindung ist auch eine thermische Prozessluftbehandlungsvorrichtung, die eine Brennkammer mit einem Brennraum darin zum thermischen Behandeln einer Prozessluft und wenigstens einen oben beschriebenen rekuperativen Brenner der Erfindung aufweist. Mit dieser thermischen Prozessluftbehandlungsvorrichtung können dieselben Vorteile erzielt werden, die oben in Bezug auf den rekuperativen Brenner der Erfindung erläutert worden sind. Außerdem sind alle oben genannten Ausgestaltungen und deren mögliche Kombinationen des rekuperativen Brenners einsetzbar, gegebenenfalls je nach Anwendungsfall der Prozessluftbehandlungsvorrichtung.

Die thermische Prozessluftbehandlungsvorrichtung kann - je nach Anwendungsfall - wahlweise einen einzelnen rekuperativen Brenner oder mehrere (d.h. zwei oder mehr) rekuperative Brenner aufweist. Im Fall von mehreren rekuperativen Brennern sind diese vorzugsweise unabhängig voneinander ansteuerbar (zum Beispiel durch die oben genannten Ventilvorrichtungen an den Eingangskanälen), sodass eine Aufteilung der Prozessluftströmungsmenge auf die mehreren Brenner und/oder eine Betriebsanzahl der mehreren Brenner flexibel geregelt werden kann. Im Fall von mehreren rekuperativen Brennern können diese - je nach Anwendungsfall der Vorrichtung und/oder je nach Ausführungsform der Brenner - zum Beispiel direkt aneinander angeordnet sein oder mit Abstand zueinander angeordnet sein.

Die Brennkammer kann ein Brennkammergehäuse aufweisen und der eine rekuperative Brenner oder die Anordnung von mehreren rekuperativen Brennern kann von einer Brennerwand umgeben sein. In einer Ausführungsform kann die Brennerwand ein Bestandteil des Brenners oder der Brenneranordnung sein und über wenigstens einen Brennerflansch an dem Brennkammergehäuse befestigbar sein. In einer anderen Ausführungsform kann die Brennerwand ein Bestandteil des Brennkammergehäuses sein und kann der Brenner oder die Brenneranordnung über wenigstens einen Brennerflansch an der Brennerwand befestigbar sein. In der zweitgenannten Ausführungsform mit der Integration der Wände der Komponenten der Prozessluftbehandlungsvorrichtung kann eine integrierte Baueinheit oder zumindest integrierte Teilbaueinheiten für die Vorrichtung geschaffen werden, was die Installation der Vorrichtung beim jeweiligen Anwendungsfall vereinfacht.

In einer Ausgestaltung der Erfindung weist die Brennkammer wenigstens eine Heizvorrichtung (z.B. eine elektrische oder elektromagnetische Aufheizvorrichtung oder eine schaltbare Hochtemperatur-Wärmequelle anderer Art) zum Versorgen des Brennraums mit Wärmeenergie auf. Durch diese Maßnahme kann das durch den Wärmeübertragungssektor vorgeheizte vorgemischte Brennluftgemisch bzw. das Brennluftgemisch aus separat durch den Wärmeübertragungssektor geleiteter und vorgeheizter Prozessluft und Brennstoff gebildete Brennluftgemisch dann sofort eine Verbrennungstemperatur erreichen, ohne dass ein zusätzlicher Zündmechanismus erforderlich ist.

Die erfindungsgemäße thermische Prozessluftbehandlungsvorrichtung ist grundsätzlich für beliebige Anwendungen / Behandlungen / Anlagen einsetzbar. Die thermische Prozessluftbehandlungsvorrichtung kann zum Beispiel als thermische, insbesondere rekuperative thermische Abluft- bzw. Abgasreinigungsanlage eingesetzt werden, zum Beispiel zum Reinigen von Schadstoffen (z.B. organische Stoffe wie beispielsweise Kohlenwasserstoffe) aus einer Abluft aus einer Werkstückbearbeitungsanlage (z.B. zum Trocknen / Vernetzen / Härten von lackierten und/oder beschichteten und/oder geklebten Werkstücken wie Karosserien oder Karosserieteilen zum Beispiel in Form von Durchlauftrocknern, Durchlaufhärtungsanlagen, Kammertrocknern oder Kammerhärtungsanalgen), zur Schwachgasverbrennung (z.B. im Deponie- oder Biogas-Umfeld, etc.), zur Erzeugung von Inertgas beispielsweise zur Desorption von Zeolithkonzentratoren. Die Erfindung ist aber nicht auf diese speziellen Anwendungen eingeschränkt.

Gegenstand der Erfindung ist auch ein Verfahren zum Betreiben des oben erläuterten rekuperativen Brenners gemäß der Erfindung, insbesondere in der oben erläuterten thermischen Prozessluftbehandlungsvorrichtung gemäß der Erfindung. Dieses Betriebsverfahren enthält die Schritte des Einleitens einer zu behandelnden Prozessluft durch den rekuperativen Brenner (durch Anschlusssektor und Wärmeübertragungssektor) in den Brennraum der Brennkammer; des thermischen Behandelns (insbesondere thermischen Oxidierens) der eingeleiteten Prozessluft im Brennraum unter Bildung eines Rauchgases; und des Ausleitens des entstandenen Rauchgases über das Rauchgasrohr aus dem Brennraum und durch den rekuperativen Brenner mit Wärmeübertragung auf die einleitende Prozessluft im Wärmeübertragungssektor und über das Rauchgas-Ausgangskanal.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, größtenteils schematisch:
- Fig. 1: eine Schnittansicht einer thermischen Prozessluftbehandlungsvorrichtung mit einem rekuperativen Brenner gemäß einem ersten Ausführungsbeispiel der Erfindung;
- Fig. 2: eine Schnittansicht einer thermischen Prozessluftbehandlungsvorrichtung mit einem rekuperativen Brenner gemäß einem zweiten Ausführungsbeispiel der Erfindung;
- Fig. 3: eine Schnittansicht einer thermischen Prozessluftbehandlungsvorrichtung mit einem rekuperativen Brenner gemäß einem dritten Ausführungsbeispiel der Erfindung;
- Fig. 4: eine Querschnittsansicht einer Variante eines Wärmeübertragungssektors für die rekuperativen Brenner von Fig. 1-3;
- Fig. 5A: eine Teilschnittansicht eines rekuperativen Brenners zum Veranschaulichen einer ersten Variante des dritten Ausführungsbeispiels von Fig. 3;
- Fig. 5B: eine Teilschnittansicht eines rekuperativen Brenners zum Veranschaulichen einer zweiten Variante des dritten Ausführungsbeispiels von Fig. 3;
- Fig. 6: eine Schnittansicht einer thermischen Prozessluftbehandlungsvorrichtung mit einem rekuperativen Brenner gemäß einem vierten Ausführungsbeispiel der Erfindung;
- Fig. 7: eine Schnittansicht einer thermischen Prozessluftbehandlungsvorrichtung mit einem rekuperativen Brenner gemäß einem fünften Ausführungsbeispiel der Erfindung;
- Fig. 8: eine Schnittansicht einer thermischen Prozessluftbehandlungsvorrichtung mit einem rekuperativen Brenner gemäß einem modifizierten fünften Ausführungsbeispiel der Erfindung;
- Fig. 9: eine Schnittansicht einer thermischen Prozessluftbehandlungsvorrichtung mit einem rekuperativen Brenner gemäß einem sechsten Ausführungsbeispiel der Erfindung;
- Fig. 10: eine Schnittansicht einer thermischen Prozessluftbehandlungsvorrichtung mit einem rekuperativen Brenner gemäß einem siebten Ausführungsbeispiel der Erfindung;
- Fig. 11: eine Querschnittsansicht einer ersten Variante des rekuperativen Brenners mit einer Gruppe von mehreren Wärmeübertragungssektorensegmenten;
- Fig. 12: eine Querschnittsansicht einer zweiten Variante des rekuperativen Brenners mit einer Gruppe von mehreren Wärmeübertragungssektorensegmenten;
- Fig. 13: eine Teilschnittansicht eines rekuperativen Brenners gemäß einem achten Ausführungsbeispiel der Erfindung;
- Fig. 14: eine Teilschnittansicht eines rekuperativen Brenners gemäß einem modifizierten achten Ausführungsbeispiel der Erfindung;
- Fig. 15: Skizzen zum Veranschaulichen einer thermischen Prozessluftbehandlungsvorrichtung mit mehreren rekuperativen Brennern gemäß einer ersten Ausführungsform der Erfindung;
- Fig. 16: Skizzen zum Veranschaulichen einer thermischen Prozessluftbehandlungsvorrichtung mit mehreren rekuperativen Brennern gemäß einer zweiten Ausführungsform der Erfindung; und
- Fig. 17: ein Flussdiagramm zum Veranschaulichen des Betriebsverfahrens des erfindungsgemäßen rekuperativen Brenners gemäß einem Ausführungsbeispiel der Erfindung.

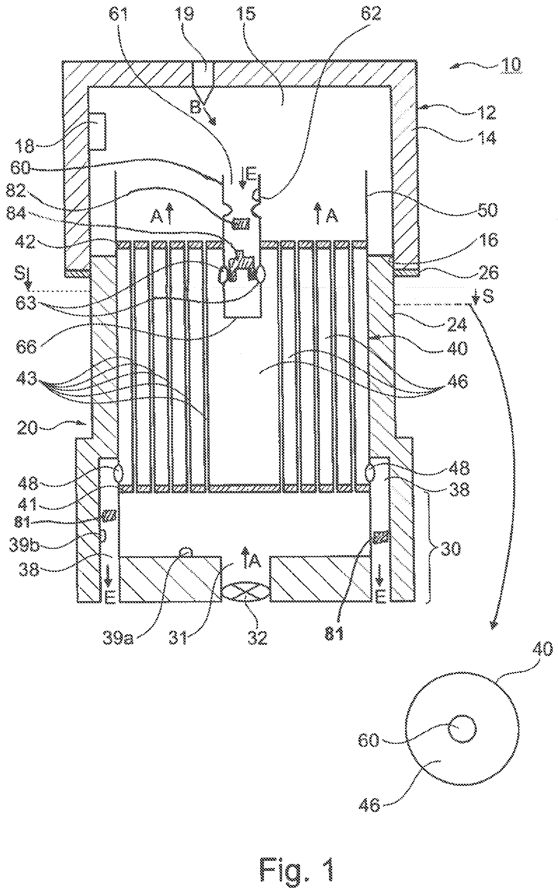

Bezugnehmend auf Fig. 1 wird ein erstes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert.

Die thermische Prozessluftbehandlungsvorrichtung 10 hat eine Brennkammer 12 mit einem Brennkammergehäuse 14, die darin einen Brennraum 15 zum thermischen Behandeln (z.B. Oxidieren) einer Prozessluft A (z.B. Abluft aus einer Werkstückbearbeitungsanlage) aufweist. Wie in Fig. 1 angedeutet, ist die Brennkammer 12 in diesem Ausführungsbeispiel auch mit einer Brennstoffzufuhr 19 zum Einleiten eines Brennstoffes B (z.B. Erdgas oder Wasserstoff) in den Brennraum 15 und einer Heizvorrichtung 18 (z.B. einer elektrischen oder elektromagnetischen Aufheizvorrichtung oder einer schaltbaren Hochtemperatur-Wärmequelle anderer Art) zum Versorgen des Brennraums 15 mit Wärmeenergie, damit die zu behandelnde Prozessluft A zusammen mit dem zugeführten Brennstoff B sofort eine Verbrennungstemperatur erreicht, ohne dass ein zusätzlicher Zündmechanismus erforderlich ist, versehen. Die Prozessluftbehandlungsvorrichtung 10 hat außerdem einen rekuperativen Brenner 20 zum Einleiten der zu behandelnden Prozessluft A in den Brennraum 15 und zum Ausleiten des durch die thermische Behandlung entstehenden Rauchgases E aus dem Brennraum 15.

Optional kann die Brennkammer 12 zusätzlich einen Heißgasausgang zum Ausleiten des heißen Rauchgases E in Heißgasausleitung aufweisen (nicht dargestellt). Durch ein solches Ausleiten des heißen Rauchgases E aus der Brennkammer 12 ist es möglich, Energie aus dem Brennraum 15 abzuziehen, um eine Überhitzung zu vermeiden, oder zusätzliche Energie aus dem Brennraum 15 anderen Wärmeübertragern (z.B. zum Aufheizen einer Werkstückbearbeitungsanlage) zuzuführen.

Der rekuperative Brenner 20 hat einen Anschlusssektor 30 mit wenigstens einem Prozessluft-Eingangskanal 31, an den eine Prozessluftleitung der jeweiligen Anlage, bei der diese Vorrichtung 10 eingesetzt ist, angeschlossen werden kann und der eine Prozessluft-Ventilvorrichtung 32 zum wahlweisen Öffnen oder Schließen und optional auch zum Drosseln des Prozessluft-Eingangskanals 31 aufweist. Der Anschlusssektor 30 weist außerdem wenigstens einen Rauchgas-Ausgangskanal 38 zum Ausleiten des Rauchgases E aus dem Brenner 20 und der Prozessbehandlungsvorrichtung 10 auf. Optional kann der Anschlusssektor 30 zusätzlich auch noch mit einem Luftanschluss zum Einleiten einer Luft (z.B. Frischluft) verbunden werden.

Der rekuperative Brenner 20 hat ferner einen (in diesem Ausführungsbeispiel rohr- bzw. kanalförmigen) Wärmeübertragungssektor 40. Der Wärmeübertragungssektor 40 weist einen Eingangsverteiler 41, der an dem Anschlusssektor 30 angebracht ist, ein der Brennkammer 12 zugewandtes Halterungselement 42 und eine Außenumfangswand auf, zwischen denen sich ein Innenraum 46 befindet. In dem Wärmeübertragungssektor 40 ist zudem eine Vielzahl von Prozessluftrohren 43 integriert, die vom Eingangsverteiler 41 durch den Innenraum 46 zum Halterungselement 42 verlaufen. Wie in Fig. 1 angedeutet, sind die Prozessluftrohre 43 einerseits durch den Eingangsverteiler 41 hindurch mit dem wenigstens einen Prozessluft-Eingangskanal 31 gekoppelt und andererseits durch das Halterungselement 42 hindurch zum Brennraum 15 offen, um die in den Anschlusssektor 30 eingeleitete Prozessluft A in den Brennraum 15 der Brennkammer 12 zu leiten. Am Halterungselement 42 des Wärmeübertragungssektors 40 ist in diesem Ausführungsbeispiel zudem ein Flammrohr 50 angebracht, dessen Außenwände im Bereich der Außenumfangswand des Wärmeübertragungssektors 40 positioniert sind, der in die Brennkammer 12 eingeschoben ist, und durch den die Prozessluft A aus den Prozessluftrohren 43 in den Brennraum 15 der Brennkammer 12 geleitet wird.

Die speziellen Strukturen und Dimensionen der Prozessluftrohre 43 sind grundsätzlich beliebig. Die Prozessluftrohre 43 können in diesem Ausführungsbeispiel zum Beispiel jeweils im Wesentlichen parallel zur Zentralachse des Brenners 20 vom Eingangsverteiler 41 zum Halterungselement 42 verlaufen und bevorzugt gestauchte (d.h. unrunde) Profile und integrierte Abstandshalter dazwischen haben. Am Eingangsverteiler 41 sind die Prozessluftrohre 43 vorzugsweise jeweils abgedichtet fixiert, sodass nur die Innenräume der Prozessluftrohre 43 mit dem Prozessluft-Eingangskanal 31 verbunden sind, aber der Innenraum 46 des Wärmeübertragungssektors 40 um die Prozessluftrohre 43 vom Anschlusssektor 30 abgesperrt ist. Am Halterungselement 42 können die Prozessluftrohre 43 auch etwas in das Flammrohr 50 hineinragen. Außerdem sind die Prozessluftrohre 43 im Halterungselement 42 jeweils nicht unbedingt abgedichtet fixiert, sondern jeweils vorzugsweise lose gehalten, sodass sie sich beispielsweise im Fall einer hitzebedingten Längendehnung individuell in die Brennkammer 12 hineinschieben können. Alternativ könnten die Prozessluftrohre 43 hierzu auch Lyra-förmig ausgestaltet sein. Die Enden der Prozessluftrohre 43 am Halterungselement 42 sind außerdem bevorzugt verjüngt, sodass die Prozessluft A im Winkel in Richtung zum Brennraum 15 geleitet wird und durch diesen Drall ein Rückleiten des Rauchgases E aus dem Brennraum 15 in sie hinein dynamisch abgesperrt wird.

Der rekuperative Brenner 20 hat ferner wenigstens ein Rauchgasrohr 60 zum Ausleiten des Rauchgases E aus dem Brennraum 15 der Brennkammer 12. Wie in Fig. 1 dargestellt, weist das Rauchgasrohr 60 eine offene Eingangsöffnung 61 im Brennraum 15 zum Aufnehmen des heißen Rauchgases E auf. Das Rauchgasrohr 60 verläuft durch den Ausgangsflansch 42 des Wärmeübertragungssektors 40 in den Wärmeübertragungssektor 40 hinein. Im Abschnitt innerhalb des Wärmeübertragungssektors 40 weist das Rauchgasrohr 60 dann eine oder bevorzugt mehrere (bevorzugt in verschiedene Richtungen und/oder an verschiedenen Längsstellen) Rohrwandöffnungen 63 zum Einleiten des heißen Rauchgases E in den von den Prozessluftrohren 43 durchlaufenen Innenraum 46 des Wärmeübertragungssektors 40 auf, damit im Innenraum 46 des Wärmeübertragungssektors 40 eine Wärmeübertragung vom ausleitenden Rauchgas E auf die Prozessluftrohre 43 und damit auf die einleitende Prozessluft A stattfindet. In seinem dem Anschlusssektor 30 zugewandten Endbereich ist der Innenraum 46 des Wärmeübertragungssektors 40 dann an den wenigstens einen Rauchgas-Ausgangskanal 38 angekoppelt ist, um das durch den Innenraum 46 hindurch abgekühlte Rauchgas E aus dem Wärmeübertragungssektor 40 und aus dem Brenner 20 auszuleiten. Durch das Einleiten des Rauchgases E mittels des Rauchgasrohres 60 aus dem in Querschnittsebene inneren Bereich des Wärmeübertragungssektors 40 in den Innenraum 46 des Wärmeübertragungssektors 40 gelangt das Rauchgas E sehr zuverlässig zu den in Querschnittsebene inneren und auch äußeren Prozessluftrohren 43 im Innenraum 46, sodass selbst bei einer großen Dimensionierung des Wärmeübertragungssektors 40 mit einer sehr großen Anzahl an Prozessluftrohren 43 zwecks Verarbeitung großer Prozessluftvolumenströme eine sehr effektive Wärmeübertragung auf die Prozessluft A stattfindet.

In diesem Ausführungsbeispiel weist der rekuperative Brenner 20 nur ein einzelnes Rauchgasrohr 60 auf, das etwa zentrisch positioniert ist, wie in der in Fig. 1 beigefügten Querschnittsansicht S-S angedeutet. Alternativ kann der rekuperative Brenner 20 auch mehrere (d.h. wenigstens zwei) Rauchgasrohre 60 enthalten. Bei dieser alternativen Ausführungsform können optional alle Rauchgasrohre oder die Gruppen mehrerer Rauchgasrohre jeweils einen gemeinsamen Eingangsabschnitt mit einer einzelnen Eingangsöffnung 61 für das Rauchgas E haben. Im Ausführungsbeispiel von Fig. 1 ragt das Rauchgasrohr 60 auch nur entlang eines Teilabschnitts ein Stück in den Wärmeübertragungssektors 40 hinein und hat eine geschlossene Rohrendwand 66. Ferner hat der Wärmeübertragungssektor 40 in diesem Ausführungsbeispiel in seinem dem Anschlusssektor 30 zugewandten Endbereich ein oder mehr äußere Ausführöffnungen 48 zum Ausleiten des Rauchgases E aus dem Innenraum 46 des Wärmeübertragungssektors 40 in den wenigstens einen Rauchgas-Ausgangskanal 38.

Das Rauchgasrohr 60 kann grundsätzlich eine beliebige Querschnittsform haben, hat aber zum Beispiel eine im Wesentlichen kreisförmige Querschnittsform. Der Wärmeübertragungssektor 40 kann ebenfalls grundsätzlich eine beliebige Querschnittsform haben, wobei er zum Beispiel eine im Wesentlichen kreisförmige oder elliptische oder polygonale (z.B. rechteckige, hexagonale, oktogonale) Querschnittsform hat. Bei einer größeren Dimensionierung wird der Wärmeübertragungssektor 40 vorzugsweise nur in einer (d.h. nicht in allen) Querschnittsrichtung erweitert, sodass er zum Beispiel eine im Wesentlichen elliptische (d.h. nicht kreisförmige) oder rechteckförmige (d.h. nicht quadratische) Querschnittsform hat. Außerdem kann das Rauchgasrohr 60 optional mit im Wesentlichen derselben Strukturierung (d.h. insbesondere Durchmesser und/oder Querschnittsform und/oder Material) wie die Prozessluftrohre 43 des Wärmeübertragungssektors 40 ausgebildet sein, was insbesondere bei Vorhandensein mehrerer Rauchgasrohre 60 vorteilhaft ist, und wodurch vorteilhafterweise eine sehr kompakte Struktur des Wärmeübertragungsektors 40 möglich ist.

Die Dimension des Wärmeübertragungssektors 40 und die Anzahl der Prozessluftrohre 43 werden an die jeweiligen Prozessluftvolumenströme angepasst, für welche die Vorrichtung 10 eingesetzt wird. Außerdem können die Länge des Wärmeübertragungssektors 40 und die entsprechende Länge der Prozessluftrohre 43 an die jeweiligen Erfordernisse an die Temperaturen der zu behandelnden Prozessluft A und des heißen Rauchgases E angepasst werden.

Zum Überwachen des Betriebszustandes und der Temperaturbedingungen weist der rekuperative Brenner 20 vorzugsweise im Anschlusssektor 30 wenigstens eine Temperaturerfassungsvorrichtung 39a zum Erfassen der Temperatur der durch den Prozessluft-Eingangskanal 31 eingeleiteten Prozessluft A, wenigstens eine Temperaturerfassungsvorrichtung 39b zum Erfassen der Temperatur des aus dem Innenraum des Wärmeübertragungssektors 40 ausgeleiteten abgekühlten Rauchgases E und/oder im Eingangsbereich des Rauchgasrohres 60 wenigstens eine Temperaturerfassungsvorrichtung 62 zum Erfassen der Temperatur des Rauchgases E auf. Die Temperaturerfassungsvorrichtungen 39a, 39b, 62 können zum Beispiel einen Temperatursensor wie beispielsweise ein Thermoelement, einen IR-Sensor, ein Pyrometer oder dergleichen aufweisen. Obwohl nicht dargestellt, kann der rekuperative Brenner 20 optional außerdem einen Differenzdruckmesser über den Wärmeübertragungssektor 40 aufweisen, um eine Verunreinigung erkennen zu können.

In diesem Ausführungsbeispiel ist der rekuperative Brenner 20 entlang seines Anschlusssektors 30 und seines Wärmeübertragungssektors 40 umfänglich von einer Brennerwand 24 umgeben, die nach dem Einschieben des Brenners 20 in die Gehäuseöffnung 16 der Brennkammer 12 über wenigstens einen Brennerflansch 26 an dem Brennkammergehäuse 14 befestigt wird.

Wie in Fig. 1 angedeutet, kann der rekuperative Brenner 20 optional ein oder mehr zusätzliche Elemente 81, 82, 84 haben, um den Rekuperationsgrad des Wärmeübertragungssektors 40 im Betrieb des rekuperativen Brenners einzustellen bzw. zu regeln. Beispielsweise ist im Rauchgas-Ausgangskanal 38 wenigstens ein Aktuator 81 vorhanden, der ausgestaltet ist, den Rauchgas-Ausgangskanal 38 wahlweise zumindest etwas zu sperren und damit die das Rauchgasrohr 60 und den Wärmeübertragungssektor 40 durchströmende Rauchgasmenge zu regeln. Alternativ oder zusätzlich kann auch im Rauchgasrohr 60 wenigstens ein Aktuator 82 vorhanden sein, der ausgestaltet ist, das Rauchgasrohr 60 wahlweise zumindest etwas zu sperren und damit die das Rauchgasrohr 60 und den Wärmeübertragungssektor 40 durchströmende Rauchgasmenge zu regeln. Die angedeuteten Aktuatoren 81, 82 sind jeweils zum Beispiel so konfiguriert, dass das zumindest teilweise Sperren des Rauchgas-Ausgangskanals 38 bzw. des Rauchgasrohres 60 durch ein axiales Verschieben des Aktuators (beispielsweise zwischen Abschnitten des Ausgangskanals 38 bzw. des Rauchgasrohres 60 mit unterschiedlichen Durchschnitten, wobei dann ein enger Abschnitt durch den Aktuator gefüllt werden kann) oder mittels eines drehbaren Elements mit Löchern, Klappen, etc. ausgeführt werden kann. Und die angedeuteten Aktuatoren 81, 82 sind zum Beispiel manuell, elektrisch, pneumatisch, elektromagnetisch und/oder hydraulisch einstellbar. Außerdem kann zusätzlich oder alternativ im Rauchgasrohr 60 ein Variator 84 vorhanden sein, der so angeordnet und ausgestaltet ist, dass er den Zugang im Rauchgasrohr 60 zu wenigstens einer oder vorzugsweise zu allen Rohrwandöffnungen 63 wahlweise zumindest etwas einschränken kann und damit regeln kann, wieviel Rauchgas E aus dem Rauchgasrohr 60 zur Wärmeübertragung auf die Prozessluft A in den Prozessluftrohren 43 in den Innenraum 46 des Wärmeübertragungssektors 40 gelangt. Der angedeutete Variator 84 ist zum Beispiel so konfiguriert, dass das zumindest teilweise Verblenden der Rohrwandöffnungen 63 durch ein axiales Verschieben oder ein Drehen des Variators 84 innerhalb des Rauchgasrohres 60 ausführbar ist. Und der angedeutete Variator 84 ist zum Beispiel ebenfalls manuell, elektrisch, pneumatisch, elektromagnetisch und/oder hydraulisch einstellbar.

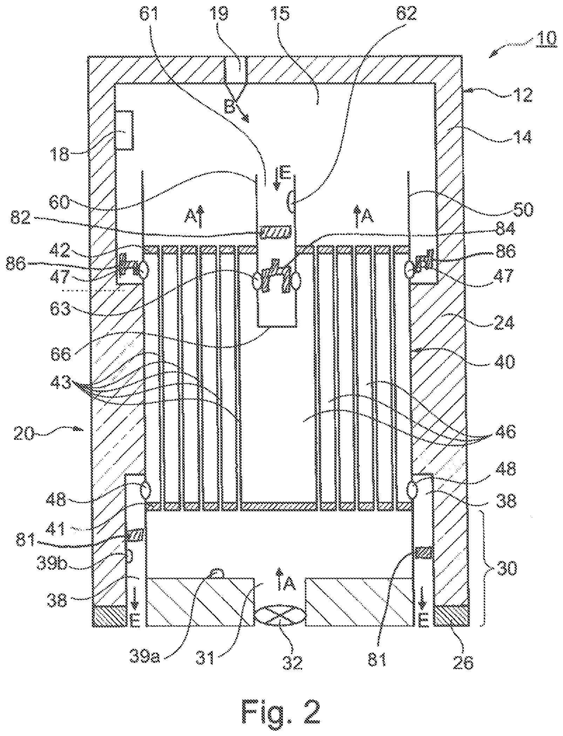

Bezugnehmend auf Fig. 2 wird ein zweites Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert. Gleiche bzw. entsprechende Komponenten sind mit den gleichen Bezugsziffern wie im ersten Ausführungsbeispiel gekennzeichnet.

Im Vergleich zum ersten Ausführungsbeispiel von Fig. 1 weist der Wärmeübertragungssektor 40 des rekuperativen Brenners 20 in diesem Ausführungsbeispiel in seinem der Brennkammer 12 zugewandten Endbereich in seinem Außenumfangsbereich ferner wenigstens eine zusätzliche Einführöffnung 47 zum Einleiten des heißen Rauchgases E aus dem Brennraum 15 der Brennkammer 12 in den Innenraum 46 des Wärmeübertragungssektors 40 auf. D.h. das heiße Rauchgas E wird in diesem Ausführungsbeispiel sowohl aus dem in Querschnittsebene inneren Bereich des Wärmeübertragungssektors 40 als auch aus dem in Querschnittsebene äußeren Bereich des Wärmeübertragungssektors 40 in den Innenraum 46 des Wärmeübertragungssektors 40 eingeleitet, sodass das heiße Rauchgas E insbesondere bei größeren Dimensionen des Brenners noch zuverlässiger zu den in Querschnittsebene inneren und äußeren Prozessluftrohren 43 im Innenraum 46 gelangt, um auch bei Verarbeitung sehr großer Prozessluftvolumenströme eine sehr effektive Wärmeübertragung auf die Prozessluft A zu gewährleisten. Die zusätzliche Einführöffnung 47 ist in diesem Ausführungsbeispiel in der Außenumfangswand des Wärmeübertragungssektors 40 vorgesehen. In einer alternativen Ausführungsform kann die zusätzliche Einführöffnung 47 auch außerhalb des Anschlussrohres 50 im Halterungselement 42 des Wärmeübertragungssektors 40 vorgesehen sein. Der Zugang vom Brennraum 15 zur zusätzlichen Einführöffnung 47 ist in beiden Varianten durch einen Abführspalt zwischen dem Brennkammergehäuse 14 und dem Anschlussrohr 50 möglich. Wie in Fig. 2 angedeutet, kann der rekuperative Brenner 20 analog zum ersten Ausführungsbeispiel von Fig. 1 optional ein oder mehr Aktuatoren 81, 82 und/oder Variatoren 84 zum Einstellen bzw. Regeln des Rekuperationsgrades des Wärmeübertragungssektors 40 aufweisen, wobei in diesem zweiten Ausführungsbeispiel auch noch optional wenigstens ein Variator 86 vorhanden ist, der so angeordnet und ausgestaltet ist, dass er den Zugang zur jeweiligen zusätzlichen Einführöffnung 47 des Rauchgases E wahlweise zumindest etwas einschränken kann und damit regeln kann, wieviel und in welchem Außenumfangsbereich Rauchgas E aus dem Brennraum 15 in den Innenraum 46 des Wärmeübertragungssektors 40 gelangt. Auch diese angedeuteten Variatoren 86 sind zum Beispiel so konfiguriert, dass das zumindest teilweise Verblenden der jeweiligen zusätzlichen Einführöffnung 47 durch ein axiales Verschieben oder ein Drehen des Variators 86 ausführbar ist.

Außerdem unterscheidet sich dieses Ausführungsbeispiel vom ersten Ausführungsbeispiel dadurch, dass die den Anschlusssektor 30 und den Wärmeübertragungssektor 40 umfänglich umgebende Brennerwand 24 als integrales Teil des Brennkammergehäuses 14 ausgestaltet ist. Der rekuperative Brenner 20 wird nach dem Einschieben in dieses Brennkammergehäuse 14+24 über wenigstens einen Brennerflansch 26 (zum Beispiel im Bereich des Anschlusssektors 30) an der Brennerwand 24 des Brennkammergehäuses 14 befestigt.

Im Übrigen entspricht dieses Ausführungsbeispiel dem ersten Ausführungsbeispiel von Fig. 1, weshalb auf weitere Konstruktionsbeschreibungen verzichtet wird.

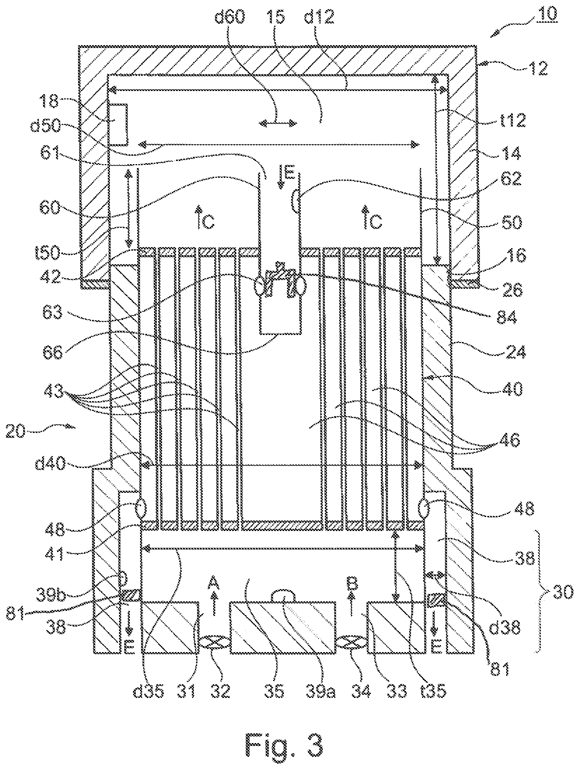

Bezugnehmend auf Fig. 3 wird ein drittes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert. Gleiche bzw. entsprechende Komponenten sind mit den gleichen Bezugsziffern wie in den vorherigen Ausführungsbeispielen gekennzeichnet.

Im Vergleich zum ersten Ausführungsbeispiel von Fig. 1 weist der Anschlusssektor 30 des rekuperativen Brenners 20 zusätzlich zu dem wenigstens einen Prozessluft-Eingangskanal 31 wenigstens einen Brennstoff-Eingangskanal 33 zum Einnehmen eines Brennstoffes B (z.B. Erdgas) auf. Der Brennstoff-Eingangskanal 33 weist ebenfalls bevorzugt eine Brennstoff-Ventilvorrichtung 34 auf, um den Brennstoff-Eingangskanal 33 wahlweise öffnen oder schließen und optional auch drosseln zu können. Außerdem ist im Anschlusssektor 30 ein Vormischraum 35 enthalten, in dem die durch den Prozessluft-Eingangskanal 31 aufgenommene Prozessluft A und der durch den Brennstoff-Eingangskanal 33 aufgenommene Brennstoff B zu einem Brennluftgemisch C vermischt werden. Optional kann zusätzlich noch über einen entsprechenden Luftanschluss eine Luft (z.B. Frischluft) in den Vormischraum 35 eingeleitet werden. Zum Unterstützen des Vermischens kann der Vormischraum 35 optional auch noch mit turbulenzfördernden Bauteilen / Einrichtungen (nicht dargestellt) ausgestattet sein. Die Prozessluftrohre 43 des Wärmeübertragungssektors 40 sind durch den Eingangsverteiler 41 mit diesem Vormischraum 35 verbunden, sodass die Prozessluftrohre 43 das Brennluftgemisch C durch den Wärmeübertragungssektor 40 zum Anschlussrohr 50 und zum Brennraum 15 leiten. Die Temperaturerfassungsvorrichtung 39a des Anschlusssektors 30 überwacht in dieser Ausführungsform die Temperatur des Brennluftgemisches C im Vormischraum 35. Da in dieser Ausführungsform der für die thermische Prozessluftbehandlung erforderliche Brennstoff durch den rekuperativen Brenner 20 in den Brennraum 15 geleitet wird, kann auf die andere Brennstoffzufuhr 19 der Brennkammer 12 verzichtet werden. Wie in Fig. 3 angedeutet, kann auch dieser rekuperative Brenner 20 analog zu den vorherigen Ausführungsbeispielen optional ein oder mehr Aktuatoren 81, 82 und/oder Variatoren 84 aufweisen.

Aufgrund des Vormischraums 35 und der gemeinsamen Einleitung von Prozessluft A mit Brennstoff B muss ein Sicherheitskonzept vorhanden sein, um eine Zündung des Brennluftgemisches C im Vormischraum 35 durch ein unbeabsichtigtes Einlaufen von heißem Rauchgas aus dem Brennraum 15 der Brennkammer 12 in den Vormischraum 35 des Anschlusssektors 30 des rekuperativen Brenners 20 zu verhindern. Dieses Sicherheitskonzept wird zum Beispiel durch die bereits oben in Bezug auf Fig. 1 beschriebenen Merkmale erfüllt, dass (i) die Prozessluftrohre 43 an ihrem der Brennkammer 12 zugewandten Ende jeweils verjüngt ausgestaltet sind, um eine Rückleitung des heißen Rauchgases aus dem Brennraum 15 in die Prozessluftrohre 43 zu verhindern, (ii) der Wärmeübertragungssektor 40 an seinem dem Anschlusssektor 35 zugewandten Ende einen Eingangsverteiler 41 in Kontakt zum Vormischraum 35 aufweist, an dem die mehreren Prozessluftrohre 43 abgedichtet fixiert sind, und (iii) der Anschlusssektor 35 eine Temperaturerfassungsvorrichtung 39a zum Erfassen einer Temperatur des Brenngasgemisches C im Vormischraum 35 aufweist, um bei einer zu hohen Temperatur die Prozessluft- und Brennstoffversorgung rechtzeitig sperren zu können.

Im Übrigen entspricht dieses Ausführungsbeispiel dem ersten Ausführungsbeispiel von Fig. 1, weshalb auf weitere Konstruktionsbeschreibungen verzichtet wird.

Außerdem ist das dritte Ausführungsbeispiel von Fig. 3 mit dem zweiten Ausführungsbeispiel von Fig. 2 kombinierbar, d.h. der Wärmeübertragungssektor 40 des rekuperativen Brenners 20 kann auch im dritten Ausführungsbeispiel von Fig. 3 mit wenigstens einer zusätzlichen Einführöffnung 47, wie sie im zweiten Ausführungsbeispiel von Fig. 2 beschrieben ist, versehen sein.

Die Dimension des Wärmeübertragungskanals 40 und die Anzahl der Prozessluftrohre 43 werden an die jeweiligen Prozessluftvolumenströme angepasst, für die die Vorrichtung 10 eingesetzt wird. Außerdem können die Länge des Wärmeübertragungssektors 40 und die entsprechende Länge der Prozessluftrohre 43 an die jeweiligen Erfordernisse an die Temperaturen des Brennluftgemisches C und des heißen Rauchgases E angepasst werden.

Beispielhaft werden nun unter Bezug auf Fig. 3 auch noch ein paar Größenordnungen der Dimensionierungen der Komponenten dieser thermischen Prozessluftbehandlungsvorrichtung 10 angegeben, die in einer erfolgreich getesteten Ausführungsform vorhanden waren. Die angegeben Werte können auch auf die anderen Ausführungsbeispiele übertragen bzw. angepasst werden. Die Brennkammer 12 hat einen Innendurchmesser d12 von etwa 1200 mm und eine Tiefe t12 von etwa 1500 mm. Das Flammrohr 50 hat eine Länge t50 von etwa 600 und bildet einen Durchmesser d50 des Ausgangsraums von etwa 650 mm (inklusive Durchmesser d60 des Rauchgasrohres 60 darin). Der Wärmeübertragungssektor 40 beinhaltet zum Beispiel etwa 330 Prozessluftrohre 43 mit einem Innendurchmesser von etwa 12 mm und einem Außendurchmesser von etwa 14 mm. Die Prozessluftrohre 43 können etwa 5 mm in das Flammrohr 50 hineinragen. Das Rauchgasrohr 60 hat einen Innendurchmesser d60 von etwa 200 mm und eine Wandstärke von etwa 4 mm. Die Innendurchmesser d35, d40 des Vormischraums 35 und des Wärmeübertragungssektors 40 betragen jeweils etwa 650 mm. Der Vormischraum 35 hat eine Tiefe t35 von etwa 300 mm. Die Eingangskanäle 31, 33 haben jeweils einen Innendurchmesser von etwa 250 mm und eine Länge von etwa 1000 mm. Der Rauchgas-Ausgangskanal 38 hat einen Innendurchmesser d38 von etwa 100 mm. Die angegebenen Zahlenwerte sind natürlich nur beispielhaft und können insbesondere je nach Anwendungsfall abgeändert werden. Außerdem wird vorsorglich darauf hingewiesen, dass die Darstellung in Fig. 3 nicht an allen Stellen den hier angegeben Größenverhältnissen entspricht.

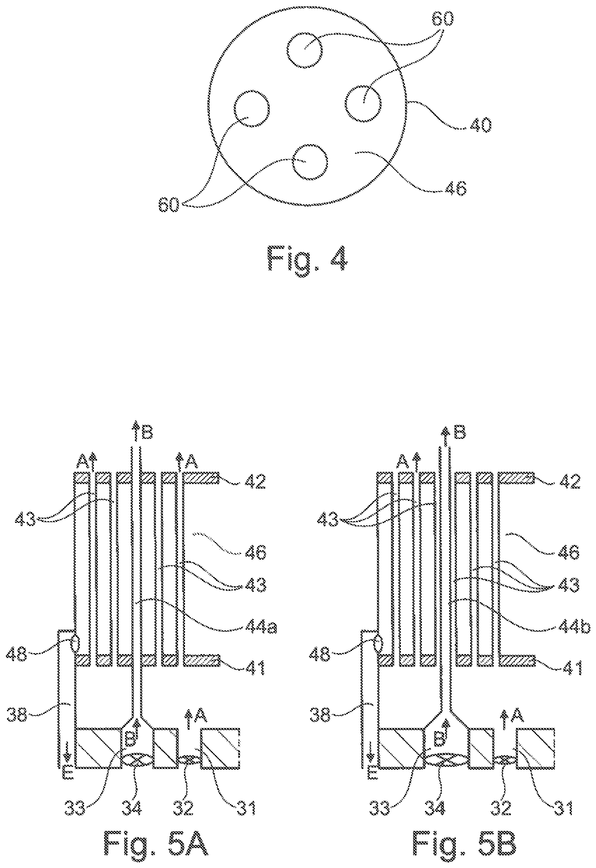

Wie bereits erwähnt, enthält der rekuperative Brenner 20 im ersten Ausführungsbeispiel ein einzelnes Rauchgasrohr 60, das im Wesentlichen zentral positioniert ist. Diese Aussage gilt auch für das zweite und das dritte Ausführungsbeispiel. Wie in Fig. 4 veranschaulicht, die eine Querschnittansicht analog S-S in Fig. 1 zeigt, können die rekuperativen Brenner 20 in allen Ausführungsbeispielen aber alternativ auch mehrere (d.h. zwei oder mehr, zum Beispiel drei oder vier) Rauchgasrohre 60 zum Einleiten des heißen Rauchgases E aus dem Brennraum 15 der Brennkammer 12 in den Innenraum 46 des Wärmeübertragungssektors 40 aufweisen. Die mehreren Rauchgasrohre 60 sind bevorzugt symmetrisch im Wärmeübertragungssektor 40 verteilt. Der Einsatz mehrerer Rauchgasrohre 60 ist insbesondere bei größer dimensionierten Wärmeübertragungssektoren 40 von Vorteil. Optional können alle Rauchgasrohre 60 oder Gruppen mehrerer Rauchgasrohre 60 jeweils einen gemeinsamen Eingangsabschnitt mit einer einzelnen Eingangsöffnung 61 haben. In diesem Fall besteht dann die Möglichkeit, wenigstens einen Aktuator 82 im jeweiligen gemeinsamen Eingangsabschnitt zu positionieren, um die kombinierten Rauchgasrohre 60 wahlweise zumindest teilweise zu versperren.

Bezugnehmend auf Fig. 5A und 5B werden zwei Varianten des dritten Ausführungsbeispiels von Fig. 3 beispielhaft in mehr Einzelheiten erläutert. Gleiche bzw. entsprechende Komponenten sind mit den gleichen Bezugsziffern wie im dritten Ausführungsbeispiel gekennzeichnet.

Im Unterschied zum dritten Ausführungsbeispiel von Fig. 3 enthält der Anschlusssektor 30 in diesen Ausführungsvarianten keinen Vormischraum 35. Das heißt, die durch den Prozessluft-Eingangskanal 31 aufgenommene Prozessluft A und der durch den Brennstoff-Eingangskanal 33 aufgenommene Brennstoff B werden nicht zu einem Brennluftgemisch C vermischt, sondern werden über den Wärmeübertragungssektor 40 separat zum Flammrohr 50 und zum Brennraum 15 geleitet. Durch das separate Leiten von Prozessluft A und Brennstoff B kann eine Entzündung der Prozessluft A schon innerhalb des Wärmeübertragungssektors 40 durch das Erhitzen durch das heiße Rauchgas E verhindert werden. Außerdem kann bei diesen Ausführungsvarianten auch zum Beispiel Wasserstoff (anstatt Erdgas) als Brennstoff benutzt werden, das eine höhere Reaktivität hat, ohne eine höhere Strömungsgeschwindigkeit zur Vermeidung einer Entzündung schon im Wärmeübertragungssektor 40, da der Wasserstoff erst bei einer Vermischung mit der Prozessluft im Brennraum 15 entzündet wird.

In beiden Varianten von Fig. 5A und 5B sind die Prozessluftrohre 43 des Wärmeübertragungssektors 40 deshalb durch den Eingangsverteiler 41 nur mit dem wenigstens einen Prozessluft-Eingangskanal 31 verbunden. In der ersten Variante von Fig. 5A weist der Wärmeübertragungssektor 40 neben den Prozessluftrohren 43 zusätzlich wenigstens ein Brennstoffrohr 44a auf, das zwischen den mehreren Prozessluftrohren 43 durch den Innenraum 46 des Wärmeübertragungssektors 40 vom Eingangsverteiler 41 zum Halterungselement 42 verläuft. In der zweiten Variante von Fig. 5A weist der Wärmeübertragungssektor 40 neben den Prozessluftrohren 43 zusätzlich wenigstens ein Brennstoffrohr 44b auf, das innerhalb eines Prozessluftrohres 43 durch den Innenraum 46 des Wärmeübertragungssektors 40 vom Eingangsverteiler 41 zum Halterungselement 42 verläuft. Wie in Fig. 5A und 5B dargestellt, ist das jeweilige Brennstoffrohr 44a, 44b direkt mit dem Brennstoff-Eingangskanal 33 verbunden oder sogar einstückig mit diesem ausgebildet. In der ersten Variante von Fig. 5A ragt das Brennstoffrohr 44a durch das Halterungselement 42 hindurch ein Stück in das Flammrohr 50 hinein. In der zweiten Variante von Fig. 5B überragt das Brennstoffrohr 44b das ihn beinhaltende Prozessluftrohr 43 nicht oder nur sehr wenig. Bei der Benutzung von Wasserstoff als Brennstoff B ist es vorteilhaft, wenn der Wasserstoff möglichst rasch von der Prozessluft A beströmt wird, um die Erzeugung von Stickoxiden zu verhindern oder zumindest zu reduzieren, die bei einem Aufheizen des Wasserstoffes ohne die Prozessluft entstehen können, um die Emissionswerte der Vorrichtung zu vermindern.

Im Übrigen entsprechen auch diese beiden Varianten des dritten Ausführungsbeispiels dem ersten Ausführungsbeispiel von Fig. 1, einschließlich Optionen, und sind auch diese beiden Varianten des dritten Ausführungsbeispiels wahlweise mit dem zweiten Ausführungsbeispiel von Fig. 2 kombinierbar.

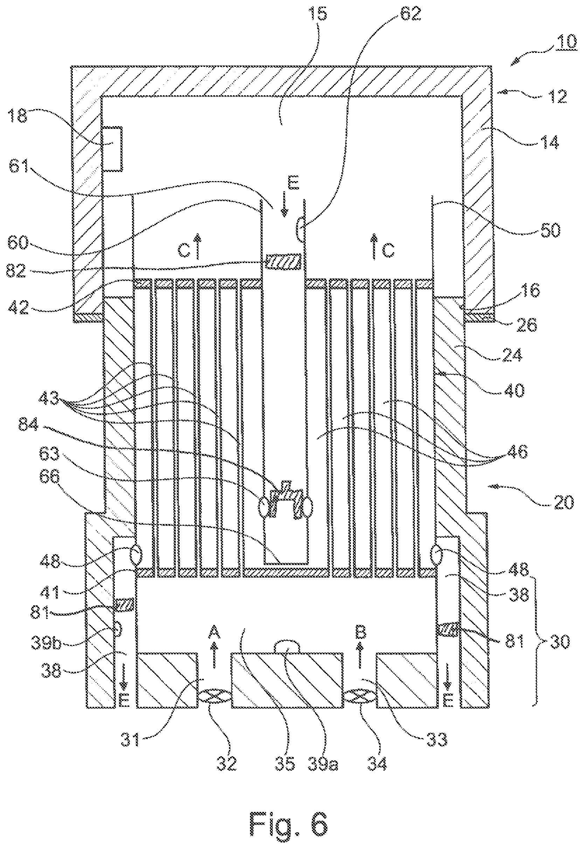

Bezugnehmend auf Fig. 6 wird ein viertes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert.

Gleiche bzw. entsprechende Komponenten sind mit den gleichen Bezugsziffern wie im ersten Ausführungsbeispiel gekennzeichnet.

Im Unterschied zum dritten Ausführungsbeispiel verläuft das Rauchgasrohr 60 durch den gesamten Wärmeübertragungssektor 40 bis zum Eingangsverteiler 41, hat aber ebenfalls eine geschlossene Rohrendwand 66. Außerdem befinden sich die RohrwandÖffnungen 63 zum Einleiten des heißen Rauchgases E in den Innenraum 46 des Wärmeübertragungssektors 40 im Unterschied zum ersten Ausführungsbeispiel erst in der dem Anschlusssektor 30 zugewandten Hälfte oder sogar erst im dem Anschlusssektor 30 zugewandten Endbereich des Wärmeübertragungssektors 40. Zum anschließenden Ausleiten des Rauchgases E aus dem Innenraum 46 hat der Wärmeübertragungssektor 40 wie im ersten Ausführungsbeispiel wenigstens eine an den Rauchgas-Ausgangskanal 38 angekoppelte Ausführöffnung 48 in seinem dem Anschlusssektor 30 zugewandten Endbereich an seinem Außenumfang. Die Wegstrecke der Wärmeübertragung im Innenraum 46 des Wärmeübertragungssektors 40 vom Rauchgas E auf die Prozessluft A ist bei dieser Ausführungsform zwar kleiner als im ersten Ausführungsbeispiel, was aber je nach Anwendungsfall von Vorteil sein kann, wenn das Rauchgas E nicht so viel Wärme verlieren soll und/oder die Prozessluft nicht so viel Wärme empfangen soll. Wie in Fig. 6 angedeutet, kann auch dieser rekuperative Brenner 20 analog zu den vorherigen Ausführungsbeispielen optional ein oder mehr Aktuatoren 81, 82 und/oder Variatoren 84 aufweisen.

Im Übrigen entspricht dieses Ausführungsbeispiel dem dritten Ausführungsbeispiel von Fig. 3, weshalb auf weitere Konstruktionsbeschreibungen verzichtet wird. Alternativ kann diese Konstruktion des Rauchgasrohres 60 auch in den Brenner 20 des ersten oder des zweiten Ausführungsbeispiels von Fig. 1 bzw. 2 integriert werden.

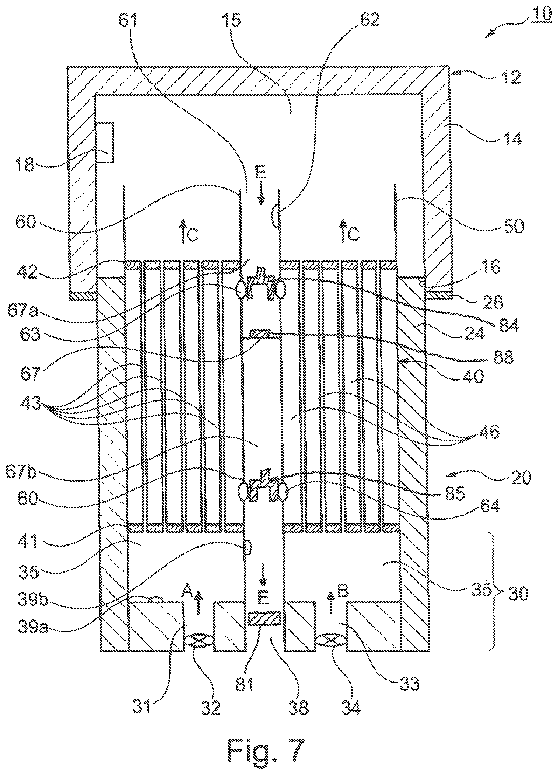

Bezugnehmend auf Fig. 7 wird ein fünftes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert. Gleiche bzw. entsprechende Komponenten sind mit den gleichen Bezugsziffern wie in den vorherigen Ausführungsbeispielen gekennzeichnet.

Im Unterschied zum dritten Ausführungsbeispiel verläuft das Rauchgasrohr 60 durch den gesamten Wärmeübertragungssektor 40 und durch den Eingangsverteiler 41 hindurch. Während das Rauchgasrohr 60 im vierten Ausführungsbeispiel von Fig. 6 eine geschlossene Rohrendwand 66 hat, ist das Rauchgasrohr 60 an seinem dem Anschlusssektor 30 zugewandten Ende offen und mit dem Rauchgas-Ausgangskanal 38 verbunden oder sogar einstückig mit dem Rauchgas-Ausgangskanal 38 ausgebildet. Das Rauchgasrohr 60 hat bei seiner Durchführung durch den Vormischraum 35 des Anschlusssektors 30 eine geschlossene Außenumfangswand, sodass das Rauchgas E nicht in das Brennluftgemisch C im Vormischraum 35 eindringen kann. Optional kann das Rauchgasrohr 60 im Bereich des Vormischraums 35 auch thermisch isoliert sein, damit keine Vorreaktion des Brennluftgemisches C auftritt. Außerdem ist das Rauchgasrohr 60 durch eine Rohrtrennwand 67 im mittleren oder oberen Bereich in Längsrichtung des Wärmeübertragungssektors 40 unterteilt in einen dem Brennraum 15 der Brennkammer 12 zugewandten Einleitabschnitt 67a, der analog zum Rauchgasrohr 60 von Fig. 3 Rohrwandöffnungen 63 zum Einleiten des heißen Rauchgases E in den Innenraum 46 des Wärmeübertragungssektors 40 aufweist, und in einen dem Anschlusssektor 30 zugewandten Ausleitabschnitt 67b, der im Endbereich nahe dem Anschlusssektor 30 mit weiteren Rohrwandöffnungen 64 zum Ausleiten des abgekühlten Rauchgases E aus dem Innenraum 46 des Wärmeübertragungssektors 24 in das Rauchgasrohr 60 versehen ist. In diesem Ausführungsbeispiel findet das Ausleiten des Rauchgases E aus dem Innenraum 46 nur im inneren Bereich zurück in das Rauchgasrohr 60 statt. Optional könnte der Wärmeübertragungssektor 40 zusätzlich analog zum Ausführungsbeispiel von Fig. 3 an seinem Außenumfang wenigstens eine Ausführöffnung 48 aufweisen, die an einen anderen Rauchgas-Ausgangskanal angekoppelt ist, der optional mit dem mit dem Rauchgasrohr 60 verbundenen Rauchgas-Ausgangskanal 38 zusammengeführt werden kann. Wie in Fig. 7 angedeutet, kann auch dieser rekuperative Brenner 20 analog zu den vorherigen Ausführungsbeispielen optional ein oder mehr Aktuatoren 81, 82 und/oder Variatoren 84 aufweisen. In diesem fünften Ausführungsbeispiel ist auch noch optional wenigstens ein Variator 85 vorhanden, der so angeordnet und ausgestaltet ist, dass er den Zugang zu wenigstens einer der wenigstens einen weiteren Rohrwandöffnung 64 wahlweise zumindest etwas einschränken kann und damit regeln kann, wieviel Rauchgas E aus dem Innenraum 46 des Wärmeübertragungssektors 40 zurück in das Rauchgasrohr 60 gelangt, um durch den Rauchgas-Ausgangskanal 38 ausgeleitet zu werden. Auch dieser angedeutete Variator 85 ist zum Beispiel so konfiguriert, dass das zumindest teilweise Verblenden der jeweiligen weiteren Rohrwandöffnung 64 durch ein axiales Verschieben oder ein Drehen des Variators 85 ausführbar ist. Außerdem kann in diesem fünften Ausführungsbeispiel auch noch optional wenigstens ein Variator 88 vorhanden sein, der so angeordnet und ausgestaltet ist, dass er die Rohrtrennwand 67 zwischen dem Einleitabschnitt 67a und dem Ausleitabschnitt 67b des Rauchgasrohres 60 wahlweise zumindest etwas öffnen kann und damit regeln kann, wieviel Rauchgas E nur durch das Rauchgasrohr 60, d.h. ohne Durchströmen des Innenraums 46 des Wärmeübertragungssektors 40 zum Rauchgas-Ausgangskanal 38 strömt. Dieser angedeutete Variator 88 ist zum Beispiel so konfiguriert, dass das zumindest teilweise Öffnen der Rohrtrennwand 67 durch ein axiales Ausschieben aus der Rohrtrennwand 67 ausführbar ist.

Im Übrigen entspricht dieses Ausführungsbeispiel dem dritten Ausführungsbeispiel von Fig. 3, weshalb auf weitere Konstruktionsbeschreibungen verzichtet wird. Alternativ kann diese Konstruktion des Rauchgasrohres 60 auch in den Brenner 20 des ersten oder des zweiten Ausführungsbeispiels von Fig. 1 bzw. 2 integriert werden.

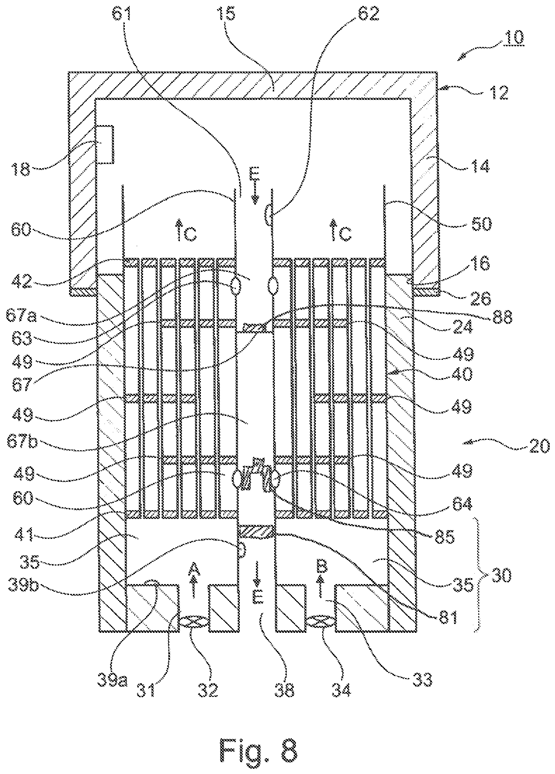

Bezugnehmend auf Fig. 8 wird eine Modifizierung des fünften Ausführungsbeispiels von Fig. 7 beispielhaft in mehr Einzelheiten erläutert. Gleiche bzw. entsprechende Komponenten sind mit den gleichen Bezugsziffern wie im fünften Ausführungsbeispiel gekennzeichnet.

Der Wärmeübertragungssektor 40 hat in seinem Innenraum 46 zusätzlich mehrere Umlenkbleche 49, die sich jeweils quer (in diesem Ausführungsbeispiel im Wesentlichen senkrecht) zu den Prozessluftrohren 43 über einen Teil des Innenraums 46 erstrecken und jeweils Durchgangsöffnungen zum Hindurchführen der Prozessluftrohre 43 aufweisen. Die Umlenkbleche 49 sind in der Laufrichtung der Prozessluftrohre 43 voneinander deutlich beabstandet und quer zur Laufrichtung der Prozessluftrohre 43 zueinander versetzt angeordnet. Die Umlenkbleche 49 bilden Strömungsleitstrukturen im Innenraum 46 des Wärmeübertragungssektors 40. Durch diese Umlenkbleche 49 wird bewirkt, dass die Wärmeübertragung vom Rauchgas E auf das Brennluftgemisch C nicht in der Art eines Gegenstromwärmetauschers erfolgt, sondern dass das vom Rauchgasrohr 60 in den Innenraum 46 des Wärmeübertragungssektors 40 eingeleitete Rauchgas E entlang der Längsrichtung des Wärmeübertragungssektors 40 hin und her umgelenkt wird und damit zu allen Prozessluftrohren 43 im äußeren Bereich und im inneren Bereich des Wärmeübertragungssektors 40 gelangt.

Im Übrigen entspricht diese Ausführungsform dem fünften Ausführungsbeispiel von Fig. 7, weshalb auf weitere Konstruktionsbeschreibungen verzichtet wird. Diese Ausführungsform des Wärmeübertragungssektors 40 kann außerdem auch mit allen anderen Ausführungsbeispielen kombiniert werden, d.h. auch die Wärmeübertragungssektoren 40 der anderen Ausführungsbeispiele können mit solchen Umlenkblechen 49 ausgestattet sein. Die Verwendung der Umlenkbleche 49 ist aber insbesondere bei den Ausführungsbeispielen sinnvoll, bei denen das Rauchgasrohr 60 seine RohrwandÖffnungen 63 zum Einleiten des Rauchgases E in den Innenraum 46 des Wärmeübertragungssektors 40 in seiner / seinem dem Ausgangsflansch 42 zugewandten Hälfte oder Endbereich aufweist, und bei denen die zusätzliche äußere Einführöffnung 47 für das Rauchgas E in den Innenraum (siehe Fig. 2) nicht vorhanden ist.

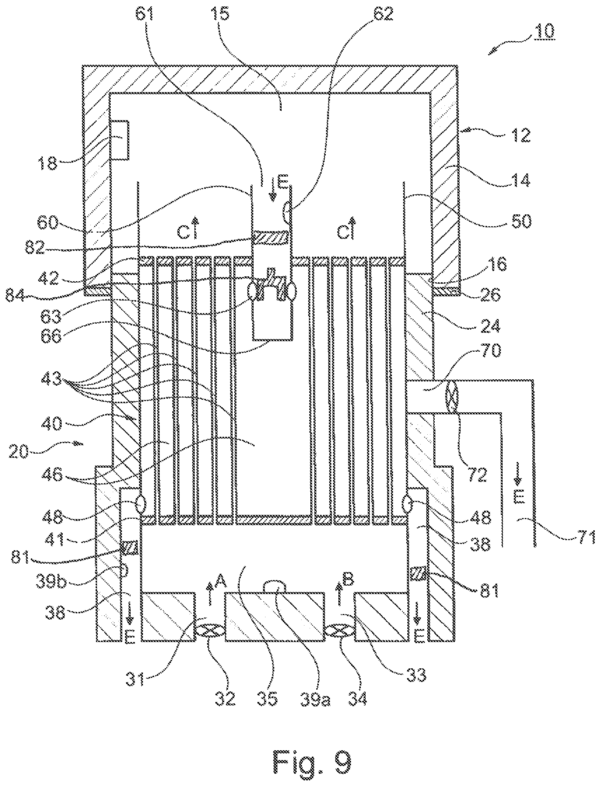

Bezugnehmend auf Fig. 9 wird ein sechstes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert. Gleiche bzw. entsprechende Komponenten sind mit den gleichen Bezugsziffern wie in den vorherigen Ausführungsbeispielen gekennzeichnet.

Das sechste Ausführungsbeispiel unterscheidet sich vom dritten Ausführungsbeispiel von Fig. 3 insbesondere durch den Strömungsverlauf des heißen Rauchgases. Wie in Fig. 9 dargestellt, weist der Wärmeübertragungssektor 40 an einer Stelle zwischen dem Eingangsverteiler 41 und dem Halterungselement 42, beispielsweise etwa im mittleren Bereich in der Längsrichtung, in seinem Außenumfang wenigstens eine Ableitöffnung 70 auf, an die ein Rauchgasableitkanal 71 angeschlossen ist. Durch diese Ableitöffnung 70 kann eine Teilmenge des Rauchgases E, das durch die Wärmeübertragung auf die Prozessluftrohre 43 bereits etwas abgekühlt ist, aus dem Wärmeübertragungssektor 40 ausgeführt werden. Das über den Rauchgasableitkanal 71 ausströmende Rauchgas E hat damit eine höhere Temperatur als das über den Rauchgas-Ausgangskanal 38 des Anschlusssektors 30 ausströmende Rauchgas E. Aufgrund der höheren Temperatur kann diese Rauchgasmenge dann bei Bedarf stromab der Prozessluftbehandlungsvorrichtung 10 an anderen Stellen (z.B. Wärmeübertragern einer Werkstückbearbeitungsanlage) mehr Wärme übertragen. Auf eine zu diesem Zweck sonst häufig benutzte zusätzliche Heißgasableitung direkt aus der Brennkammer 12 (wie oben in Zusammenhang mit Fig. 1 erwähnt) kann damit wahlweise verzichtet werden. Wie in Fig. 9 angedeutet, ist die Ableitöffnung 70 vorzugsweise auch mit einem Durchflussregler 72 zum wahlweisen Einstellen der Rauchgasableitmenge ausgestattet, wodurch die Temperatur des Innenraums 46 im dem Anschlusssektor 30 zugewandten Bereich des Wärmeübertragungssektors 40 und die Temperatur des abgeleiteten Rauchgases E im Rauchgasableitkanal 71 geregelt werden können. Während in Fig. 9 nur eine Ableitöffnung 70 dargestellt ist, kann der Wärmeübertragungssektor 40 entlang seines Umfanges auch mehrere solche Ableitöffnungen 70 haben, die mit separaten Rauchgasableitkanälen 71 oder einem gemeinsamen Rauchgasableitkanal 71 verbunden sind.

Außerdem strömt durch diese Ausführung einer Teilmenge des Rauchgases E durch den Rest des Innenraums 46 des Wärmeübertragungssektors 40 in Richtung zum Anschlusssektor 30 eine geringere Menge an heißem Rauchgas. Dies führt auch dazu, dass die Temperatur der Prozessluftrohre 43 im Bereich nahe dem Anschlusssektor 30 niedriger ist als ohne diese Teilabführung. Aufgrund der so entstehenden niedrigeren Temperaturbelastung können die Prozessluftrohre 43 abschnittweise aus unterschiedlichen Materialien gefertigt werden. Insbesondere können die Prozessluftrohre 43 im Bereich zwischen der Ableitöffnung 70 und dem Anschlusssektor 30 zumindest teilweise (insbesondere nahe am Anschlusssektor 30) aus einem preisgünstigeren Edelstahl gefertigt werden, sodass die Herstellungskosten der Prozessluftrohre 43 und damit auch des rekuperativen Brenners 20 gesenkt werden können.

Im Übrigen entspricht dieses Ausführungsbeispiel dem dritten Ausführungsbeispiel von Fig. 3, weshalb auf weitere Konstruktionsbeschreibungen verzichtet wird. Diese Ausführungsform des Wärmeübertragungssektors 40 kann außerdem auch mit allen anderen Ausführungsbeispielen kombiniert werden, d.h. auch die Wärmeübertragungssektoren 40 der anderen Ausführungsbeispiele können mit einer solchen Ableitöffnung 70 ausgestattet sein. Und wie in Fig. 9 angedeutet, kann auch dieser rekuperative Brenner 20 analog zu den vorherigen Ausführungsbeispielen optional ein oder mehr Aktuatoren 81, 82 und/oder Variatoren 84 aufweisen.

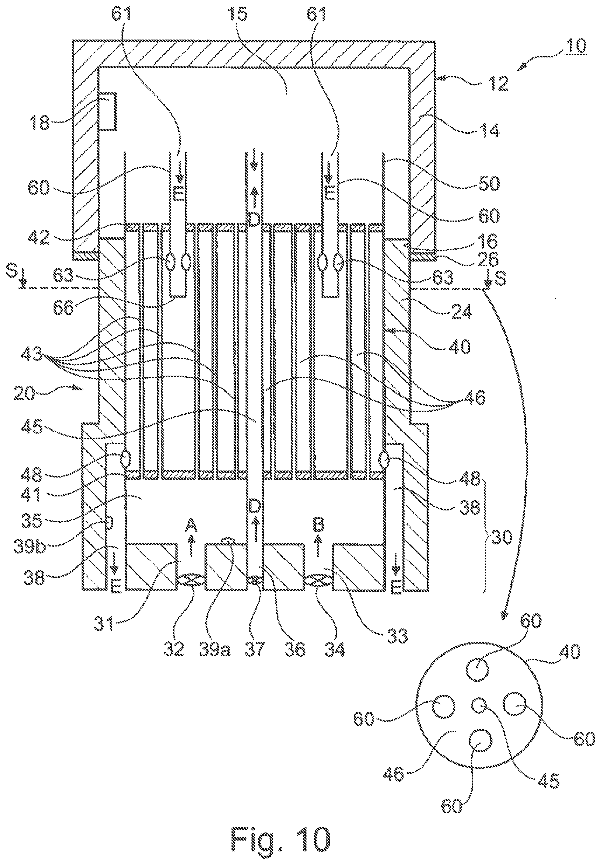

Bezugnehmend auf Fig. 10 wird ein siebtes Ausführungsbeispiel eines rekuperativen Brenners gemäß der Erfindung und einer thermischen Prozessluftbehandlungsvorrichtung mit einem solchen Brenner beispielhaft in mehr Einzelheiten erläutert. Gleiche bzw. entsprechende Komponenten sind mit den gleichen Bezugsziffern wie in den vorherigen Ausführungsbeispielen gekennzeichnet.

Im Unterschied zum dritten Ausführungsbeispiel von Fig. 3 leitet der rekuperative Brenner 20 zusätzlich zum Brennluftgemisch C Zusatzmittel D (z.B. Zündmittel und/oder weitere Prozessmedien zum Unterstützen der thermischen Prozessluftbehandlung im Brennraum, wie beispielsweise VOC oder Luft) in den Brennraum 15 der Brennkammer 12. Zu diesem Zweck weist der Anschlusssektor 30 zusätzlich wenigstens einen Zusatzmittel-Eingangskanal 36 zum Einnehmen eines Zusatzmittels D auf, wobei der Zusatzmittel-Eingangskanal 36 auch mit einer Zusatzmittel-Ventilvorrichtung 37 versehen sein kann. Außerdem weist der Brenner 20 zusätzlich wenigstens ein Zusatzmittelrohr 45 auf, das durch den Eingangsverteiler 41 an den wenigstens einen Zusatzmittel-Eingangskanal 36 angekoppelt ist und neben den Prozessluftrohren 43 durch den gesamten Wärmeübertragungssektor 40 bis durch das Halterungselement 42 hindurch in das Flammrohr 50 verläuft, um zusätzlich zum Brennluftgemisch C ein entsprechendes Zusatzmittel C in den Brennraum 15 zu leiten. Im Ausführungsbeispiel von Fig. 10 ist beispielhaft ein einzelnes Zusatzmittelrohr 45 vorgesehen, das zentral im Wärmeübertragungssektor 40 positioniert ist. Zu möglichst effektiven Wärmeübertragung vom Rauchgas E auf die Prozessluftrohre 43 sind deshalb vorzugsweise mehrere Rauchgasrohre 60 vorgesehen, die beispielsweise um das Zündmittelrohr 45 herum im Wärmeübertragungssektor 40 positioniert sind (wie auch in der in Fig. 10 beigefügten Querschnittsansicht S-S veranschaulicht).

Im Übrigen entspricht dieses Ausführungsbeispiel dem dritten Ausführungsbeispiel von Fig. 3, weshalb auf weitere Konstruktionsbeschreibungen verzichtet wird. Obwohl in Fig. 10 nicht angedeutet, kann auch dieser rekuperative Brenner 20 analog zu den vorherigen Ausführungsbeispielen optional ein oder mehr Aktuatoren 81, 82 und/oder Variatoren 84 aufweisen.

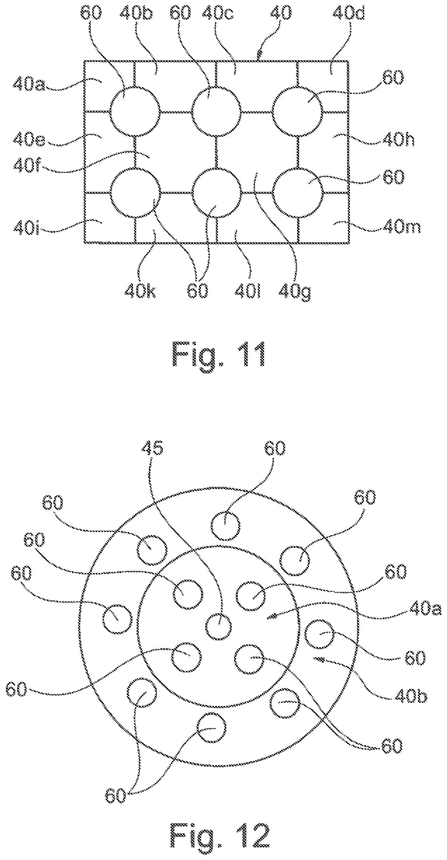

In Fig. 11 und 12 sind beispielhaft weitere Konstruktionsvarianten des rekuperativen Brenners 20, insbesondere seines Wärmeübertragungssektors 40 veranschaulicht. Während in den obigen Ausführungsbeispielen der Wärmeübertragungssektor 40 jeweils als eine Baueinheit ausgestaltet ist, kann der Wärmeübertragungssektor 40 auch aus mehreren (d.h. zwei oder mehr) Wärmeübertragungssektorensegmenten 40n bestehen. Durch diese Maßnahme kann der rekuperative Brenner 20 mehrstufig ausgebildet und betreibbar sein. Die mehreren Wärmeübertragungssektorensegmente 40n sind vorzugsweise jeweils mit eigenen Eingangskanälen 31, 33 im Anschlusssektor 50 verkoppelt, deren Ventilvorrichtungen 32, 34 vorzugsweise unabhängig voneinander ansteuerbar sind, sodass die Sektorensegmente 40n unabhängig voneinander betrieben werden können, um den Brennerbetrieb an die Betriebsbedingungen (insbesondere die Prozessluftströmungsmenge) anzupassen.

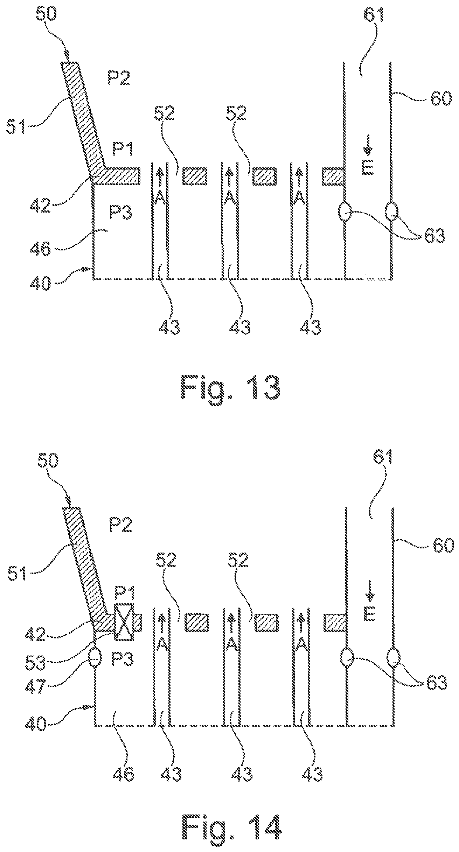

In der Ausführungsvariante von Fig. 11 sind mehrere Wärmeübertragungssektorensegmente 40a-m nebeneinander angeordnet und sind mehrere Rauchgasrohre 60 zwischen den Sektorensegmenten 40a-m angeordnet. Die Rauchgasrohre 60 können so besonders einfach eingefügt, gewartet und ausgetauscht werden. In einer alternativen Ausführungsform können die Rauchgasrohre 60 auch innerhalb der Sektorensegmente 40a angeordnet sind. Während im Ausführungsbeispiel von Fig. 11 die Sektorensegmente zum unterschiedlich geformt sind, sind auch andere Ausführungsformen mit einer einheitlichen Form der Wärmeübertragungssektorensegmente möglich. In der Ausführungsvariante von Fig. 12 sind zwei Wärmeübertragungssektorensegmente 40a, 40b koaxial zueinander angeordnet und sind jeweils mehrere Rauchgasrohre 60 innerhalb der Sektorensegmente 40a, 40b angeordnet. In diesem Ausführungsbeispiel enthält das innere Sektorensegment 40a zudem ein zentrales Zusatzmittelrohr 45. Beispielsweise kann der Brenner 20 bei geringen Prozessluftströmungsmengen nur über das innere Sektorensegment 40a betrieben werden und kann bei höheren Prozessluftströmungsmengen das äußere Sektorensegment 40b hinzugeschaltet werden. Aufgrund der möglichst engen Ankopplung der Sektorensegmente 40n zueinander, haben bei diesen Ausführungsvarianten die Anschlussrohre 50 der Brenner 20 besser keine schrägen Außenumfangswände 51 (siehe Fig. 13 und 14) und ist besser keine äußere Einleitung von Rauchgas E über zusätzliche äußere Einführöffnungen 47 in die Innenräume 46 der Wärmeübertragungssektoren 40 vorgesehen.

In Fig. 13 und 14 sind beispielhaft weitere Konstruktionsvarianten des rekuperativen Brenners 20, insbesondere seines Halterungselements 42 und seines Flammrohres 50 veranschaulicht.

Wie bereits erwähnt, sind die Prozessluftrohre 43 vorzugsweise lose in das Halterungselement 42 des Wärmeübertragungssektors 40 eingekoppelt, d.h. im Halterungselement 42 von Öffnungen bzw. Spalten 52 umgeben, damit sie sich im Fall einer hitzebedingten Längendehnung individuell in die Brennkammer 12 hineinschieben können. Da der Druck im Flammrohr 50 standardmäßig deutlich höher ist als im Innenraum 46 des Wärmeübertragungssektors 40 bestünde wegen der Spalten 52 ein Risiko, dass wegen des Druckunterschiedes ein Teil der noch unbehandelten Prozessluft A bzw. des Brennluftgemisches C sofort in den Innenraum 46 zurückströmt und sich darin mit dem Rauchgas E vermischt. Aus diesem Grund hat das am Halterungselement 42 vorhandene / montierte Flammrohr 50 vorzugsweise Außenumfangswände 51, die in Richtung zum Brennraum 15 schräg nach außen geneigt sind, wie in Fig. 13 dargestellt. Durch diese Ausrichtung der Außenumfangswände 51 wird die Querschnittsfläche des Flammrohres 50 und damit der vom Flammrohr 50 eingeschlossene Raum in Richtung zum Brennraum 15 erweitert, wodurch die Prozessluft A bzw. das Brennluftgemisch C mehr verbreitet wird, was andere Druckverhältnisse im Flammrohr 50 entstehen lässt. Insbesondere wird der Druck P1 nahe am Halterungselement 42 deutlich niedriger als der Druck P2 entfernt vom Halterungselement 42, sodass der Druck P1 nur noch unwesentlich höher oder sogar niedriger als der Druck P3 im Innenraum 46 wird. Als Ergebnis strömt die Prozessluft A bzw. das Brennluftgemisch C nicht durch die Spalten 52 zurück in den Innenraum 46 des Wärmeübertragungssektors 40. Alternativ oder zusätzlich zu der speziellen Ausrichtung der Außenumfangswände 51 des Flammrohres 50 können zu diesem Zweck auch die Wände des Rauchgasrohres 60 spezielle Ausrichtungen haben.

In der Ausführungsform des Wärmeübertragungssektors 40 mit der zusätzlichen äußeren Einführöffnung 467 bestünde aber trotz der schrägen Außenumfangswände 51 des Flammrohres 50 noch die Möglichkeit, dass ein Teil der Prozessluft A bzw. des Brennluftgemisches C durch den großen Druckunterschied zwischen P2 und P3 nicht weiter in den Brennraum 15 strömt, sondern um die Außenumfangswand 51 des Flammrohres 50 herum direkt in den Abführspalt des Rauchgases zwischen dem Brennkammergehäuse 14 und dem Flammrohr 50 umströmt und damit durch die zusätzliche äußere Einführöffnung 47 zurück in den Innenraum 46 des Wärmeübertragungssektors 40 einströmt. Wie in Fig. 14 veranschaulicht, weist das Halterungselement 42 des Wärmeübertragungssektors 40 deshalb vorzugsweise im äußeren Bereich eine Zusatzöffnung auf, in der ein Draller 53 zum schrägen Rückleiten des Rauchgases E zusammen mit der potenziell eingeströmten Prozessluft A aus dem Innenraum 46 in das Flammrohr 50 angeordnet ist. Auch wenn keine Prozessluft A unbehandelt in den Innenraum 46 zurückströmt, ist dieses Rückleiten des Rauchgases E nicht nachteilig, da durch die so wiederholte thermische Behandlung die Behandlungswirkung verstärkt wird.

Während in den obigen Ausführungsbeispielen die thermische Prozessluftbehandlungsvorrichtung 10 jeweils einen rekuperativen Brenner 20 beinhaltet, ist es im Rahmen der Erfindung auch möglich, mehrere (d.h. zwei oder mehr) rekuperative Brenner 20 gemäß der Erfindung in eine Brennkammer 12 einzuschieben. Die Anzahl der Brenner 20 kann je nach Anwendungsfall an die Betriebsanforderungen der Vorrichtung 10 angepasst werden. Außerdem sind die mehreren Brenner 20 bevorzugt unabhängig voneinander ansteuerbar, sodass auch der Betrieb der Prozessluftbehandlungsvorrichtung 10 an die aktuellen Betriebsanforderungen (insbes. Prozessluftströmungsmenge) angepasst werden kann. Durch diese Modularität der rekuperativen Brenner 20 können diese bevorzugt auch etwas kleiner, insbesondere einheitlich kleiner (anstelle unterschiedlicher Größen für verschiedene Betriebsanforderungen) ausgestaltet werden, was die Herstellung, Wartung, Qualitätssicherung, etc. vereinfacht, und auf einfache Weise bei Bedarf in größeren Anzahlen eingesetzt werden.

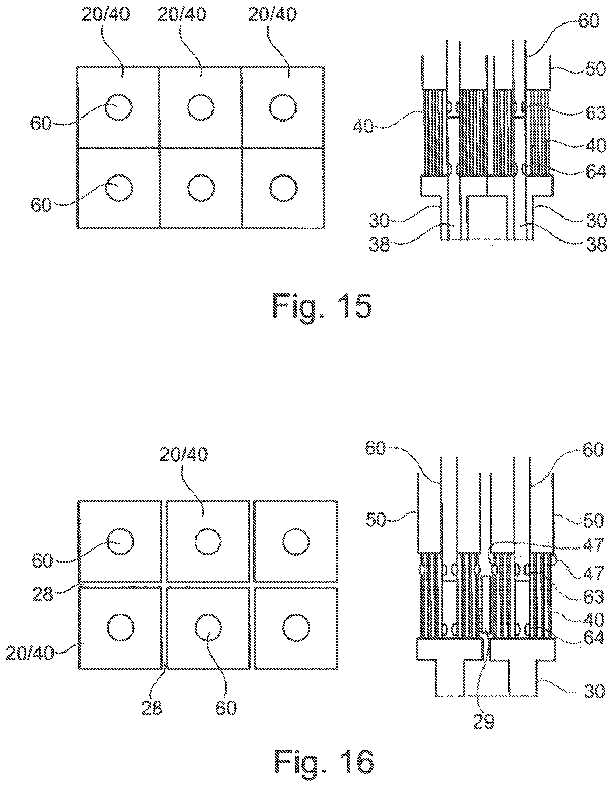

Fig. 15 zeigt ein Ausführungsbeispiel mit sechs Brennern 20, in deren Wärmeübertragungssektoren 40 jeweils ein einzelnes zentrales Rauchgasrohr 60 enthalten ist. Im Ausführungsbeispiel von Fig. 15 sind die mehreren Brenner 20 direkt nebeneinander angeordnet. Wie in der rechten Teilfigur von Fig. 15 erkennbar, ist dies insbesondere möglich, wenn die Flammrohre 50 der Brenner 20 keine schrägen Außenumfangswände 51 (siehe Fig. 13 und 14) haben und wenn keine äußere Einleitung von Rauchgas E über zusätzliche äußere Einführöffnungen 47 in die Innenräume 46 der Wärmeübertragungssektoren 40 vorgesehen ist.

Fig. 16 zeigt ebenfalls ein Ausführungsbeispiel mit sechs Brennern 20, in deren Wärmeübertragungssektoren 40 jeweils ein einzelnes zentrales Rauchgasrohr 60 enthalten ist. Im Ausführungsbeispiel von Fig. 16 sind die mehreren Brenner 20 aber jeweils etwas voneinander beabstandet. Im Bereich der entsprechenden Brennerspalten 28 zwischen benachbarten Brennern 20 sind dann vorzugsweise Brennerzwischenwände 29 zwischen den benachbarten Wärmeübertragungssektoren 40 eingefügt, um die Brennerspalten 28 zum Verhindern einer Rauchgasströmung zwischen den Brennern 20 abzuschließen, wie in der rechten Teilfigur von Fig. 16 erkennbar. Aufgrund der Abstände zwischen den benachbarten Brennern 20 ist es in dieser Ausführungsform aber auch möglich, Flammrohre 50 mit schrägen Außenumfangswänden 51 und/oder äußere Einleitungen von Rauchgas E über zusätzliche äußere Einführöffnungen 47 in die Innenräume 46 der Wärmeübertragungssektoren 40 zu benutzen.

In Fig. 15 und 16 haben die rekuperativen Brenner 20 jeweils eine im Wesentlichen quadratische Querschnittsform. Grundsätzlich können die rekuperativen Brenner 20 der Erfindung beliebige Querschnittsformen haben (beispielsweise kreisförmig, elliptisch, rechteckig oder polygonal), beim modularen Einsatz der Brenner 20 sind jedoch rechteckige oder quadratische Querschnittsformen besser geeignet, um die Brenner nahe nebeneinander oder sogar direkt aneinander anzuordnen.

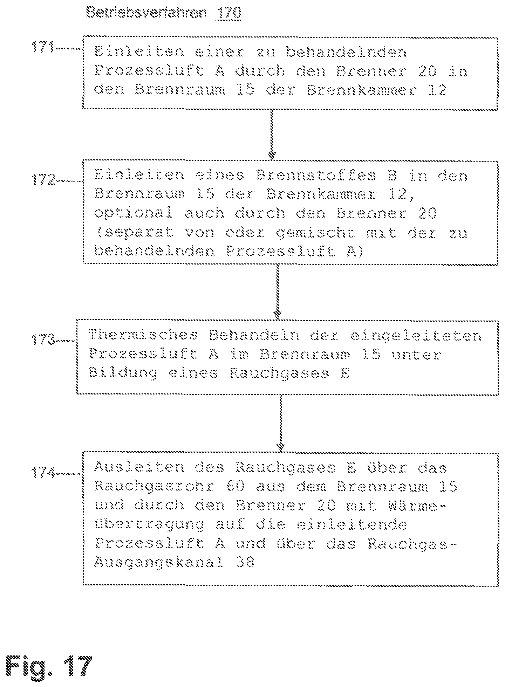

Fig. 17 veranschaulicht beispielhaft ein Betriebsverfahren 170 des rekuperativen Brenners 20 in der thermischen Prozessluftbehandlungsvorrichtung 10, das bei allen oben beschriebenen Ausführungsbeispielen der Fig. 1 bis 16 anwendbar ist.

In Schritt 171 wird eine zu behandelnde Prozessluft A durch den rekuperativen Brenner 20 in den Brennraum 15 der Brennkammer 12 eingeleitet, wobei die zu behandelnde Prozessluft A gemäß der erfindungsgemäßen Konstruktion des rekuperativen Brenners 20 durch seinen Anschlusssektor 30 und seinen Wärmeübertragungssektor 40 in den Brennraum 15 der Brennkammer 12 eingeleitet wird. In Schritt 172 wird außerdem ein Brennstoff B in den Brennraum 15 der Brennkammer 12 eingeleitet. Je nach Ausführungsform des rekuperativen Brenners 20 und der Prozessluftbehandlungsvorrichtung 10 wird der Brennstoff B zum Beispiel durch eine Brennstoffzufuhr 19 direkt in den Brennraum 15 eingeleitet (siehe z.B. Fig. 1) und/oder durch den Brenner 20 in den Brennraum 15 eingeleitet (siehe z.B. Fig. 3-10), wobei das Einleiten des Brennstoffes B durch den Brenner 20 in den Brennraum 15 je nach Ausführungsform des rekuperativen Brenners 20 separat von (siehe z.B. Fig. 5A, 5B) oder gemischt mit (siehe z.B. Fig. 3, 6) der zu behandelnden Prozessluft A erfolgt. Die Reihenfolge dieser beiden Schritte 171 und 172 ist grundsätzlich beliebig.

Nach dem Einleiten des Brennstoffes B und der zu behandelnden Prozessluft A in den Brennraum 15 der Brennkammer 12 wird in Schritt 173 die eingeleitete Prozessluft A im Brennraum 15 thermisch behandelt, insbesondere thermisch oxidiert. Bei dieser thermischen Behandlung der Prozessluft A entsteht im Brennraum 15 das Rauchgas E. Dieses Rauchgas E wird in Schritt 174 über das wenigstens eine Rauchgasrohr 60 aus dem Brennraum 15 ausgeleitet und durch den rekuperativen Brenner 20 mit Wärmeübertragung auf die einleitende Prozessluft A (im Wärmeübertragungssektor 40 des Brenners 20) geleitet und über das Rauchgas-Ausgangskanal 38 aus der Prozessluftbehandlungsvorrichtung 10 ausgeleitet. Der Ablauf dieser Rauchgasleitung ist je nach Ausführungsform des rekuperativen Brenners 20 etwas unterschiedlich, wie in den oben erläuterten Ausführungsbeispielen ersichtlich. Und das Ausleiten des Rauchgases E kann optional durch die oben erläuterten Aktuatoren und/oder Variatoren variiert werden.

Der Schutzbereich der Erfindung ist durch den anhängenden Anspruchssatz definiert. Die oben erläuterten Ausführungsbeispiele, einschließlich deren Varianten, dienen insbesondere dem besseren Verständnis der Erfindung, sollen aber den Schutzbereich nicht einschränken. Der Fachmann wird weitere Ausführungsvarianten im Schutzbereich der Erfindung erkennen können, die zum Beispiel auf weiteren Merkmalskombinationen der obigen Ausführungsbeispiele, weiteren Kombinationen von ein oder mehr der obigen Ausführungsbeispiele (d.h. nicht nur ausdrücklich erwähnte Kombinationsbeispiele), auf einzelnen weggelassenen Merkmalen der obigen Ausführungsbeispiele und/oder auf einzelnen modifizierten Merkmalen der obigen Ausführungsbeispiele basieren. Zum Beispiel sind auch alle Ausführungsbeispiele der Fig. 3 bis 14 mit dem zweiten Ausführungsbeispiel von Fig. 2 kombinierbar, d.h. der Wärmeübertragungssektor 40 des rekuperativen Brenners 20 kann in allen Ausführungsformen um wenigstens eine zusätzliche Einführöffnung 47, wie sie im zweiten Ausführungsbeispiel von Fig. 2 beschrieben ist, ergänzt werden.

### BEZUGSZIFFERNLISTE

- 10: thermische Prozessluftbehandlungsvorrichtung
- 12: Brennkammer
- 14: Brennkammergehäuse
- 15: Brennraum
- 16: Gehäuseöffnung
- 18: Heizvorrichtung
- 19: Brennstoffzufuhr
- 20: rekuperativer Brenner
- 24: Brennerwand
- 26: Brennerflansch
- 28: Brennerspalten
- 29: Brennerzwischenwände
- 30: Anschlusssektor
- 31: Prozessluft-Eingangskanal
- 32: Prozessluft-Ventilvorrichtung
- 33: Brennstoff-Eingangskanal
- 34: Brennstoff-Ventilvorrichtung
- 35: Vormischraum
- 36: Zusatzmittel-Eingangskanal
- 37: Zusatzmittel-Ventilvorrichtung
- 38: Rauchgas-Ausgangskanal
- 39a: Temperaturerfassungsvorrichtung
- 39b: Temperaturerfassungsvorrichtung
- 40: Wärmeübertragungssektor
- 40n: Wärmeübertragungssektorensegmente
- 41: Eingangsverteiler
- 42: Halterungselement
- 43: Prozessluftrohre
- 44a: Brennstoffrohr zwischen Prozessluftrohren
- 44b: Brennstoffrohr innerhalb Prozessluftrohr
- 45: Zusatzmittelrohr
- 46: Innenraum
- 47: zusätzliche Einführöffnung
- 48: äußere Ausführöffnung
- 49: Umlenkbleche
- 50: Flammrohr
- 51: schräge Außenwand
- 52: Spalten / Öffnungen in Ausgangsflansch
- 53: Draller
- 60: Rauchgasrohr
- 61: Eingangsöffnung
- 62: Temperaturerfassungsvorrichtung
- 63: Rohrwandöffnungen
- 64: weitere Rohrwandöffnungen
- 66: Rohrendwand
- 67: Rohrtrennwand
- 67a: Einleitabschnitt
- 67b: Ausleitabschnitt
- 70: Ableitöffnung
- 71: Rauchgasableitkanal
- 72: Durchflussregler
- 81: Aktuator in 38
- 82: Aktuator in 60
- 84: Variator an 63
- 85: Variator an 64
- 86: Variator an 47
- 88: Variator an 67

- A: Prozessluft
- B: Brennstoff
- C: Brennluftgemisch
- D: Zusatzmittel
- E: Rauchgas
- d12 / t12: Innendurchmesser / Tiefe der Brennkammer
- d35 / t35: Innendurchmesser / Tiefe des Vormischraums
- d38: Innendurchmesser des Rauchgas-Ausgangskanals
- d40: Innendurchmesser des Wärmeübertragungssektors
- d50 / t50: Durchmesser / Länge des Flammrohres
- d60: Innendurchmesser des Rauchgasrohres

## Patentansprüche

1. Rekuperativer Brenner (20) für eine thermische Prozessluftbehandlungsvorrichtung (10), die eine Brennkammer (12) mit einem Brennraum (15) darin zum thermischen Behandeln einer Prozessluft aufweist, wobei der rekuperative Brenner (20) ausgestaltet ist zum Einleiten einer zu behandelnden Prozessluft (A) in den Brennraum (15) der Brennkammer und zum Ausleiten eines durch thermisches Behandeln der Prozessluft (A) entstehenden Rauchgases (E) aus dem Brennraum (15) der Brennkammer mit einer Wärmeübertragung vom ausleitenden Rauchgas (E) auf die einleitende Prozessluft (A),
wobei der rekuperative Brenner (20) aufweist:
einen Anschlusssektor (30), der wenigstens einen Prozessluft-Eingangskanal (31) zum Einnehmen der Prozessluft (A) und wenigstens einen Rauchgas-Ausgangskanal (38) zum Ausgeben des Rauchgases (E) aufweist; und
einen Wärmeübertragungssektor (40), der einen an den Anschlusssektor (30) angebrachten Eingangsverteiler (41) und ein dem Brennraum (15) der Brennkammer (12) zugewandtes Halterungselement (42) aufweist, zwischen denen sich ein Innenraum (46) befindet, in dem mehrere Prozessluftrohre (43) vom Eingangsverteiler (41) zum Halterungselement (42) verlaufen, um die Prozessluft (A) vom Anschlusssektor (30) zum Brennraum (15) zu leiten, wobei die Prozessluftrohre (43) durch den Eingangsverteiler (41) hindurch an den wenigstens einen Prozessluft-Eingangskanal (31) des Anschlusssektors (30) angekoppelt sind und durch das Halterungselement (42) hindurch in Richtung zum Brennraum (15) offen sind, wobei der rekuperative Brenner (20) wenigstens ein Rauchgasrohr (60) zum Ausleiten des Rauchgases (E) aus dem Brennraum (15) aufweist,
**dadurch gekennzeichnet, dass**
das wenigstens eine Rauchgasrohr (60) eine offene Eingangsöffnung (61) im Brennraum (15) aufweist und durch das Halterungselement (42) des Wärmeübertragungssektors (40) in den Wärmeübertragungssektor (40) hinein verläuft und im Abschnitt innerhalb des Wärmeübertragungssektors (40) wenigstens eine Rohrwandöffnung (63) zum Einleiten des Rauchgases (E) in den von den Prozessluftrohren (43) durchlaufenen Innenraum (46) des Wärmeübertragungssektors (40) zwecks Wärmeübertragung vom ausleitenden Rauchgas (E) auf die einleitende Prozessluft (A) aufweist,
wobei der Innenraum (46) des Wärmeübertragungssektors (40) in seinem dem Anschlusssektor (30) zugewandten Endbereich an den wenigstens einen Rauchgas-Ausgangskanal (38) angekoppelt ist, um das Rauchgas (E) aus dem Wärmeübertragungssektor (40) und aus dem Brenner (20) auszuleiten.

2. Rekuperativer Brenner (20) nach Anspruch 1, bei welchem der Wärmeübertragungssektor (40) in seinem dem Brennraum (15) zugewandten Endbereich in seinem Außenumfangsbereich ferner wenigstens eine zusätzliche Einführöffnung (47) zum Einleiten des Rauchgases (E) aus dem Brennraum (15) in den von den Prozessluftrohren (43) durchlaufenen Innenraum (46) des Wärmeübertragungssektors (40) aufweist.

3. Rekuperativer Brenner nach Anspruch 1 oder 2, ferner aufweisend ein Flammrohr (50), das an der dem Innenraum (46) abgewandten Seite des Halterungselements (42) des Wärmeübertragungssektors (40) vorgesehen ist, um die Prozessluft (A) über das Flammrohr (50) in den Brennraum (15) einzuleiten, wobei das Rauchgasrohr (60) durch das Flammrohr (50) und durch das Halterungselement (42) des Wärmeübertragungssektors (40) in den Wärmeübertragungssektor (40) hinein verläuft.

4. Rekuperativer Brenner nach einem der Ansprüche 1 bis 3, bei welchem das Rauchgasrohr (60) nur entlang eines Teilabschnitts in den Wärmeübertragungssektor (40) hineinragt und eine geschlossene Rohrendwand (66) aufweist.

5. Rekuperativer Brenner nach einem der Ansprüche 1 bis 3, bei welchem das Rauchgasrohr (60) durch den gesamten Wärmeübertragungssektor (40) bis zum Eingangsverteiler (41) verläuft und eine geschlossene Rohrendwand (66) aufweist,
wenigstens eine der wenigstens einen Rohrwandöffnung (63) zum Einleiten des Rauchgases (E) in den Innenraum (46) des Wärmeübertragungssektors (40) in der dem Anschlusssektor (30) zugewandten Hälfte des Wärmeübertragungssektors (40) angeordnet ist, und
der Wärmeübertragungssektor (40) in seinem dem Anschlusssektor (30) zugewandten Endbereich an seinem Außenumfang wenigstens eine Ausführöffnung (48) aufweist, die an den wenigstens einen Rauchgas-Ausgangskanal (38) angekoppelt ist.

6. Rekuperativer Brenner nach einem der Ansprüche 1 bis 3, bei welchem das Rauchgasrohr (60) durch den gesamten Wärmeübertragungssektor (40) und durch den Eingangsverteiler (41) hindurch verläuft,
das Rauchgasrohr (60) zwischen dem Bereich des Halterungselements (42) und dem Bereich des Eingangsverteilers (41) eine Rohrtrennwand (67) aufweist, um einen dem Halterungselement (42) zugewandten Einleitabschnitt (67a) und einen dem Eingangsverteiler (41) zugewandten Ausleitabschnitt (67b) zu bilden, wobei der Ausleitabschnitt (67b) an den wenigstens einen Rauchgas-Ausgangskanal (38) angekoppelt ist,
die wenigstens eine Rohrwandöffnung (63) zum Einleiten des Rauchgases (E) in den Innenraum (46) des Wärmeübertragungssektors (40) im Einleitabschnitt (67a) angeordnet ist, und
das Rauchgasrohr (60) in seinem Ausleitabschnitt (67b) wenigstens eine weitere Rohrwandöffnung (64) zum Ausleiten des Rauchgases (E) aus dem Innenraum (46) des Wärmeübertragungssektors (40) in das Rauchgasrohr (60) aufweist.

7. Rekuperativer Brenner (20) nach einem der vorhergehenden Ansprüche, ferner aufweisend :
(i) wenigstens einen Aktuator (81), der ausgestaltet und angeordnet ist, um den Rauchgas-Ausgangskanal (38) wahlweise zumindest etwas zu sperren; und/oder
(ii) wenigstens einen Aktuator (82), der ausgestaltet und angeordnet ist, um wenigstens einen des wenigstens einen Rauchgasrohres (60) wahlweise zumindest etwas zu sperren.

8. Rekuperativer Brenner (20) nach einem der vorhergehenden Ansprüche, ferner aufweisend :
(iii) wenigstens einen Variator (84), der ausgestaltet und angeordnet ist, um den Zugang zu wenigstens einer der wenigstens einen Rohrwandöffnung (63) des Rauchgasrohres (60) wahlweise zumindest etwas einzuschränken; und/oder
(iv) wenigstens einen Variator (85), der ausgestaltet und angeordnet ist, um den Zugang zu wenigstens einer der wenigstens einen weiteren Rohrwandöffnung (64) des Rauchgasrohres (60) wahlweise zumindest etwas einzuschränken; und/oder
(v) wenigstens einen Variator (86), der ausgestaltet und angeordnet ist, um den Zugang zu wenigstens einer der wenigstens einen zusätzlichen Einführöffnung (47) in den Innenraum (46) des Wärmeübertragungssektors (40) wahlweise zumindest etwas einzuschränken; und/oder
(vi) wenigstens einen Variator (88), der ausgestaltet und angeordnet ist, um die Rohrtrennwand (67) zwischen dem Einleitabschnitt (67a) und dem Ausleitabschnitt (67b) des Rauchgasrohres (60) wahlweise zumindest etwas zu öffnen.

9. Rekuperativer Brenner (20) nach einem der vorhergehenden Ansprüche, bei welchem der Wärmeübertragungssektor (40) an einer Stelle zwischen dem Halterungselement (42) und dem Eingangsverteiler (41) an seinem Außenumfang wenigstens eine Ableitöffnung (70) zum Ausführen eines Teils des Rauchgases (E) aus dem Innenraum (46) des Wärmeübertragungssektors (40) in einen Rauchgasableitkanal (71) aufweist, wobei die Ableitöffnung (70) vorzugsweise mit einem Durchflussregler (72) zum wahlweisen Einstellen einer Rauchgasableitmenge ausgestattet ist.

10. Rekuperativer Brenner (20) nach einem der vorhergehenden Ansprüche, bei welchem der Wärmeübertragungssektor (40) in seinem Innenraum (46) mehrere Umlenkbleche (49) enthält, die jeweils quer zu den Prozessluftrohren (43) ausgerichtet sind und jeweils Durchgangsöffnungen zum Hindurchführen der Prozessluftrohre (43) haben, wobei die mehreren Umlenkbleche (49) in der Laufrichtung der Prozessluftrohre (43) voneinander beabstandet sind und in der Richtung quer zur Laufrichtung der Prozessluftrohre (43) zueinander versetzt sind.

11. Rekuperativer Brenner (20) nach einem der vorhergehenden Ansprüche, bei welchem der Anschlusssektor (30) ferner wenigstens einen Brennstoff-Eingangskanal (31) zum Einnehmen eines Brennstoffes (B) und einen Vormischraum (35) zum Mischen der Prozessluft (A) und des Brennstoffes (B) zu einem Brennluftgemisch (C) aufweist, wobei die Prozessluftrohre (43) des Wärmeübertragungssektors (40) durch den Eingangsverteiler (41) hindurch an den Vormischraum (35) angekoppelt sind, um das Brennluftgemisch (C) vom Anschlusssektor (30) zum Brennraum (15) zu leiten, wobei der Anschlusssektor (30) vorzugsweise ferner wenigstens eine Temperaturerfassungsvorrichtung (39a) zum Erfassen einer Temperatur des Brennluftgemisches (C) im Vormischraum (35) aufweist.

12. Rekuperativer Brenner (20) nach einem der vorhergehenden Ansprüche, bei welchem
der Anschlusssektor (30) ferner wenigstens einen Brennstoff-Eingangskanal (31) zum Einnehmen eines Brennstoffes (B) aufweist, und
der Brenner (20) ferner wenigstens ein Brennstoffrohr (44a, 44b) aufweist, das an den wenigstens einen Brennstoff-Eingangskanal (31) angekoppelt ist und zwischen den Prozessluftrohren (43) oder innerhalb eines Prozessluftrohrs (43) durch den Innenraum (46) des Wärmeübertragungssektors (40) verläuft, um den Brennstoff (B) getrennt zur Prozessluft (A) vom Anschlusssektor (30) zum Brennraum (15) zu leiten.

13. Rekuperativer Brenner (20) nach einem der vorhergehenden Ansprüche, bei welchem
der Anschlusssektor (30) ferner wenigstens einen Zusatzmittel-Eingangskanal (36) zum Einnehmen eines Zusatzmittels (D) aufweist, und
der Brenner (20) ferner wenigstens ein Zusatzmittelrohr (45) aufweist, das an den wenigstens einen Zusatzmittel-Eingangskanal (36) angekoppelt ist und neben den Prozessluftrohren (43) durch den Wärmeübertragungssektor (40) verläuft, um zusätzlich zur Prozessluft (A) ein Zusatzmittel (D) in die Brennkammer (12) zu leiten.

14. Rekuperativer Brenner (20) nach einem der vorhergehenden Ansprüche, bei welchem die Prozessluftrohre (43) jeweils an ihrem dem Brennraum (15) zugewandten Ende verjüngt ausgestaltet sind und/oder lose in das Halterungselement (42) des Wärmeübertragungssektors (40) eingekoppelt sind und/oder zumindest eine Teilmenge der Prozessluftrohre (43) einen Flammenstabilisator aufweist.

15. Rekuperativer Brenner (20) nach einem der vorhergehenden Ansprüche, bei welchem das Flammrohr (50) und/oder das Rauchgasrohr (60) Außenumfangswände aufweisen, die derart ausgestaltet und ausgerichtet sind, dass der vom Flammrohr (50) eingeschlossene Raum in Richtung vom Halterungselement (42) des Wärmeübertragungssektors (40) zum Brennraum (15) erweitert wird.

16. Rekuperativer Brenner (20) nach einem der vorhergehenden Ansprüche, bei welchem das Halterungselement (42) des Wärmeübertragungssektors (40) neben den Prozessluftrohren (43) wenigstens eine Zusatzöffnung aufweist, in der ein Draller (53) zum schrägen Rückleiten von Gas (A, C, E) aus dem Innenraum (46) des Wärmeübertragungssektors (40) in das Flammrohr (50) angeordnet ist.

17. Rekuperativer Brenner (20) nach einem der vorhergehenden Ansprüche, bei welchem der Anschlusssektor (30) wenigstens eine Ventilvorrichtung (32, 34, 36) zum wahlweisen Öffnen oder Schließen eines jeweiligen Eingangskanals (31, 33, 37) aufweist.

18. Rekuperativer Brenner (20) nach einem der vorhergehenden Ansprüche, ferner aufweisend eine Differenzdruckmessvorrichtung über den Wärmeübertragungssektor (40).

19. Rekuperativer Brenner (20) nach einem der vorhergehenden Ansprüche, bei welchem der Wärmeübertragungssektor (40) aus mehreren Wärmeübertragungssektorensegmenten (40n) besteht, wobei die mehreren Wärmeübertragungssektorensegmente (40n) jeweils wenigstens ein Rauchgasrohr (60) beinhalten und/oder wenigstens ein Rauchgasrohr (60) zwischen wenigstens zwei Wärmeübertragungssektorensegmenten (40n) angeordnet ist.

20. Thermische Prozessluftbehandlungsvorrichtung (10), aufweisend:
eine Brennkammer (12), die darin einen Brennraum (15) zum thermischen Behandeln einer Prozessluft aufweist; und
wenigstens einen rekuperativen Brenner (20) zum Einleiten der zu behandelnden Prozessluft (A) in den Brennraum (15) und zum Ausleiten eines durch thermisches Behandeln der Prozessluft (A) entstehenden Rauchgases (E) aus dem Brennraum (15) mit einer Wärmeübertragung vom ausleitenden Rauchgas (E) auf die einleitende Prozessluft (A),
wobei der wenigstens eine rekuperative Brenner (20) ein rekuperativer Brenner (20) nach einem der vorhergehenden Ansprüche ist.

21. Thermische Prozessluftbehandlungsvorrichtung (10) nach Anspruch 20, welche mehrere rekuperative Brenner (20) aufweist, die unabhängig voneinander ansteuerbar sind.

22. Thermische Prozessluftbehandlungsvorrichtung (10) nach Anspruch 20 oder 21, bei welcher die Brennkammer (12) wenigstens eine Heizvorrichtung (18) zum Versorgen des Brennraums mit Wärmeenergie aufweist.

23. Verfahren (170) zum Betreiben eines rekuperativen Brenners (20) nach einem der Ansprüche 1 bis 19, insbesondere in einer thermischen Prozessluftbehandlungsvorrichtung (10) nach einem der Ansprüche 20 bis 22, aufweisend wenigstens folgende Schritte:
Einleiten (171) einer zu behandelnden Prozessluft (A) durch den rekuperativen Brenner (20) in den Brennraum (15) der Brennkammer (12);
Thermisches Behandeln (173) der eingeleiteten Prozessluft (A) im Brennraum (15) unter Bildung eines Rauchgases (E); und
Ausleiten (174) des Rauchgases (E) über das Rauchgasrohr (60) aus dem Brennraum (15) und durch den rekuperativen Brenner (20) mit Wärmeübertragung auf die einleitende Prozessluft (A) und über das Rauchgas-Ausgangskanal (38).

## Claims

1. A recuperative burner (20) for a thermal process air treatment device (10), which has a combustion chamber (12) with a combustion space (15) therein for thermally treating a process air, wherein the recuperative burner (20) is designed to introduce a process air (A) to be treated into the combustion space (15) of the combustion chamber and to discharge a flue gas (E) produced by thermally treating the process air (A) from the combustion space (15) of the combustion chamber with a heat transfer from the discharge flue gas (E) to the introduced process air (A),
wherein the recuperative burner (20) has:
a connection sector (30), which has at least one process air inlet channel (31) for receiving the process air (A) and at least one flue gas outlet channel (38) for discharging the flue gas (E); and
a heat transfer sector (40), which has an inlet distributor (41) attached to the connection sector (30) and a holding element (42) facing the combustion space (15) of the combustion chamber (12), between which an inner space (46) is located, in which a plurality of process air pipes (43) run from the inlet distributor (41) to the holding element (42) in order to conduct the process air (A) from the connection sector (30) to the combustion space (15), wherein the process air pipes (43) are coupled through the inlet distributor (41) to the at least one process air inlet channel (31) of the connection sector (30) and are open through the holding element (42) in the direction of the combustion space (15),
wherein the recuperative burner (20) has at least one flue gas pipe (60) for discharging the flue gas (E) from the combustion space (15), **characterized in that** the at least one flue gas pipe (60) has an open inlet opening (61) in the combustion space (15) and runs through the holding element (42) of the heat transfer sector (40) into the heat transfer sector (40) and has, in the section within the heat transfer sector (40), at least one pipe wall opening (63) for introducing the flue gas (E) into the inner space (46) of the heat transfer sector (40) through which the process air pipes (43) pass for the purpose of heat transfer from the discharge flue gas (E) to the introduced process air (A),
wherein the inner space (46) of the heat transfer sector (40) is coupled in its end region facing the connection sector (30) to the at least one flue gas outlet channel (38) in order to discharge the flue gas (E) from the heat transfer sector (40) and from the burner (20).

2. The recuperative burner (20) according to claim 1, in which the heat transfer sector (40) further has, in its end region facing the combustion space (15), in its outer circumferential region, at least one additional introduction opening (47) for introducing the flue gas (E) from the combustion space (15) into the inner space (46) of the heat transfer sector (40) through which the process air pipes (43) pass.

3. The recuperative burner according to claim 1 or 2, further having a flame pipe (50) which is provided on the side of the holding element (42) of the heat transfer sector (40) facing away from the inner space (46) in order to introduce the process air (A) via the flame pipe (50) into the combustion space (15), wherein the flue gas pipe (60) runs through the flame pipe (50) and through the holding element (42) of the heat transfer sector (40) into the heat transfer sector (40).

4. The recuperative burner according to one of claims 1 to 3, in which the flue gas pipe (60) projects into the heat transfer sector (40) only along a partial section and has a closed pipe end wall (66).

5. The recuperative burner according to one of claims 1 to 3, in which the flue gas pipe (60) runs through the entire heat transfer sector (40) as far as the inlet distributor (41) and has a closed pipe end wall (66),
at least one of the at least one pipe wall openings (63) for introducing the flue gas (E) into the inner space (46) of the heat transfer sector (40) is arranged in the half of the heat transfer sector (40) facing the connection sector (30), and
the heat transfer sector (40) has, in its end region facing the connection sector (30), on its outer circumference at least one discharge opening (48), which is coupled to the at least one flue gas outlet channel (38).

6. The recuperative burner according to one of claims 1 to 3, in which
the flue gas pipe (60) runs through the entire heat transfer sector (40) and through the inlet distributor (41),
the flue gas pipe (60) has, between the region of the holding element (42) and the region of the inlet distributor (41), a pipe partition wall (67) in order to form an introduction section (67a) facing the holding element (42) and a discharge section (67b) facing the inlet distributor (41), wherein the discharge section (67b) is coupled to the at least one flue gas outlet channel (38),
the at least one pipe wall opening (63) for introducing the flue gas (E) into the inner space (46) of the heat transfer sector (40) is arranged in the introduction section (67a), and
the flue gas pipe (60) has, in its discharge section (67b), at least one further pipe wall opening (64) for discharging the flue gas (E) from the inner space (46) of the heat transfer sector (40) into the flue gas pipe (60).

7. The recuperative burner (20) according to one of the preceding claims, further having:
(i) at least one actuator (81), which is designed and arranged in order to selectively block the flue gas outlet channel (38) at least somewhat; and/or
(ii) at least one actuator (82), which is designed and arranged in order to selectively block at least one of the at least one flue gas pipe (60) at least somewhat.

8. The recuperative burner (20) according to one of the preceding claims, further having: )
(iii) at least one variator (84), which is designed and arranged in order to selectively restrict the access to at least one of the at least one pipe wall openings (63) of the flue gas pipe (60) at least somewhat; and/or
(iv) at least one variator (85), which is designed and arranged in order to selectively restrict the access to at least one of the at least one further pipe wall opening (64) of the flue gas pipe (60) at least somewhat; and/or
(v) at least one variator (86), which is designed and arranged in order to selectively restrict the access to at least one of the at least one additional introduction opening (47) into the inner space (46) of the heat transfer sector (40) at least somewhat; and/or
(vi) at least one variator (88), which is designed and arranged in order to selectively open the pipe partition wall (67) between the introduction section (67a) and the discharge section (67b) of the flue gas pipe (60) at least somewhat.

9. The recuperative burner (20) according to one of the preceding claims, in which the heat transfer sector (40) has, at a point between the holding element (42) and the inlet distributor (41), on its outer circumference at least one discharge opening (70) for discharging part of the flue gas (E) from the inner space (46) of the heat transfer sector (40) into a flue gas discharge channel (71), wherein the discharge opening (70) is preferably equipped with a throughflow regulator (72) for selectively setting a flue gas discharge quantity.

10. The recuperative burner (20) according to one of the preceding claims, in which the heat transfer sector (40) contains, in its inner space (46), a plurality of deflection plates (49), which are each oriented transversely to the process air pipes (43) and each have through-openings for leading through the process air pipes (43), wherein the plurality of deflection plates (49) are spaced apart from one another in the running direction of the process air pipes (43) and are offset from one another in the direction transversely to the running direction of the process air pipes (43).

11. The recuperative burner (20) according to one of the preceding claims, in which the connection sector (30) further has at least one fuel inlet channel (31) for receiving a fuel (B) and a premixing space (35) for mixing the process air (A) and the fuel (B) to form a combustion air mixture (C), wherein the process air pipes (43) of the heat transfer sector (40) are coupled through the inlet distributor (41) to the premixing space (35) in order to conduct the combustion air mixture (C) from the connection sector (30) to the combustion space (15), wherein the connection sector (30) preferably further has at least one temperature detection device (39a) for detecting a temperature of the combustion air mixture (C) in the premixing space (35).

12. The recuperative burner (20) according to one of the preceding claims, in which the connection sector (30) further has at least one fuel inlet channel (31) for receiving a fuel (B), and
the burner (20) further has at least one fuel pipe (44a, 44b), which is coupled to the at least one fuel inlet channel (31) and runs between the process air pipes (43) or within a process air pipe (43) through the inner space (46) of the heat transfer sector (40) in order to conduct the fuel (B) separately from the process air (A) from the connection sector (30) to the combustion space (15).

13. The recuperative burner (20) according to one of the preceding claims, in which the connection sector (30) further has at least one additive inlet channel (36) for receiving an additive (D), and
the burner (20) further has at least one additive pipe (45), which is coupled to the at least one additive inlet channel (36) and runs next to the process air pipes (43) through the heat transfer sector (40) in order to conduct an additive (D) into the combustion chamber (12) in addition to the process air (A).

14. The recuperative burner (20) according to one of the preceding claims, in which the process air pipes (43) are each designed to be tapered at their end facing the combustion space (15) and/or are coupled loosely into the holding element (42) of the heat transfer sector (40) and/or at least a subset of the process air pipes (43) has a flame stabilizer.

15. The recuperative burner (20) according to one of the preceding claims, in which the flame pipe (50) and/or the flue gas pipe (60) have outer circumferential walls, which are designed and oriented in such a way that the space enclosed by the flame pipe (50) is widened in the direction from the holding element (42) of the heat transfer sector (40) to the combustion space (15).

16. The recuperative burner (20) according to one of the preceding claims, in which the holding element (42) of the heat transfer sector (40) has, next to the process air pipes (43), at least one additional opening, in which a swirler (53) for obliquely returning gas (A, C, E) from the inner space (46) of the heat transfer sector (40) into the flame pipe (50) is arranged.

17. The recuperative burner (20) according to one of the preceding claims, in which the connection sector (30) has at least one valve device (32, 34, 36) for selectively opening or closing a respective inlet channel (31, 33, 37).

18. The recuperative burner (20) according to one of the preceding claims, further having a differential pressure measuring device via the heat transfer sector (40).

19. The recuperative burner (20) according to one of the preceding claims, in which the heat transfer sector (40) consists of a plurality of heat transfer sector segments (40n), wherein the plurality of heat transfer sector segments (40n) each contain at least one flue gas pipe (60) and/or at least one flue gas pipe (60) is arranged between at least two heat transfer sector segments (40n).

20. A thermal process air treatment device (10), having:
a combustion chamber (12), which has a combustion space (15) therein for thermally treating a process air; and
at least one recuperative burner (20) for introducing the process air (A) to be treated into the combustion space (15) and for discharging a flue gas (E) produced by thermally treating the process air (A) from the combustion space (15) with a heat transfer from the discharge flue gas (E) to the introduced process air (A),
wherein the at least one recuperative burner (20) is a recuperative burner (20) according to one of the preceding claims.

21. The thermal process air treatment device (10) according to claim 20, which has a plurality of recuperative burners (20), which can be controlled independently of one another.

22. The thermal process air treatment device (10) according to claim 20 or 21, in which the combustion chamber (12) has at least one heating device (18) for supplying the combustion space with thermal energy.

23. A method (170) for operating a recuperative burner (20) according to one of claims 1 to 19, in particular in a thermal process air treatment device (10) according to one of claims 20 to 22, having at least the following steps:
introducing (171) a process air (A) to be treated through the recuperative burner (20) into the combustion space (15) of the combustion chamber (12);
thermally treating (173) the introduced process air (A) in the combustion space (15) while forming a flue gas (E); and
discharging (174) the flue gas (E) via the flue gas pipe (60) from the combustion space (15) and through the recuperative burner (20) with heat transfer to the introduced process air (A) and via the flue gas outlet channel (38).

## Revendications

1. Brûleur à récupération (20) pour un dispositif de traitement d'air de processus thermique (10), qui présente une chambre de combustion (12) avec une espace de combustion (15) dans celle-ci pour le traitement thermique d'un air de processus, le brûleur à récupération (20) étant configuré pour introduire un air de processus à traiter (A) dans l'espace de combustion (15) de la chambre de combustion et pour évacuer un gaz de fumée (E) produit par le traitement thermique de l'air de processus (A) hors de l'espace de combustion (15) de la chambre de combustion avec un transfert de chaleur du gaz de fumée évacué (E) à l'air de processus introduit (A),
le brûleur à récupération (20) présentant :
un secteur de raccordement (30), qui présente au moins un canal d'entrée d'air de processus (31) pour recevoir l'air de processus (A) et au moins un canal de sortie de gaz de fumée (38) pour évacuer le gaz de fumée (E) ; et
un secteur de transfert de chaleur (40), qui présente un répartiteur d'entrée (41) monté sur le secteur de raccordement (30) et un élément de support (42) tourné vers l'espace de combustion (15) de la chambre de combustion (12), entre lesquels se trouve un espace intérieur (46), dans lequel plusieurs tubes d'air de processus (43) s'étendent du répartiteur d'entrée (41) à l'élément de support (42), afin de guider l'air de processus (A) du secteur de raccordement (30) à l'espace de combustion (15), les tubes d'air de processus (43) étant couplés à travers le répartiteur d'entrée (41) à l'au moins un canal d'entrée d'air de processus (31) du secteur de raccordement (30) et étant ouverts à travers l'élément de support (42) en direction de l'espace de combustion (15),
le brûleur à récupération (20) présentant au moins un tube de gaz de fumée (60) pour évacuer le gaz de fumée (E) hors de l'espace de combustion (15), **caractérisé en ce que** l'au moins un tube de gaz de fumée (60) présente une ouverture d'entrée ouverte (61) dans l'espace de combustion (15) et s'étend à travers l'élément de support (42) du secteur de transfert de chaleur (40) dans le secteur de transfert de chaleur (40) et présente dans la section à l'intérieur du secteur de transfert de chaleur (40) au moins une ouverture de paroi de tube (63) pour introduire le gaz de fumée (E) dans l'espace intérieur (46) du secteur de transfert de chaleur (40) traversé par les tubes d'air de processus (43) en vue du transfert de chaleur du gaz de fumée évacué (E) à l'air de processus introduit (A), l'espace intérieur (46) du secteur de transfert de chaleur (40) étant couplé dans sa région d'extrémité tournée vers le secteur de raccordement (30) à l'au moins un canal de sortie de gaz de fumée (38), afin d'évacuer le gaz de fumée (E) hors du secteur de transfert de chaleur (40) et hors du brûleur (20).

2. Brûleur à récupération (20) selon la revendication 1, dans lequel le secteur de transfert de chaleur (40) présente dans sa région d'extrémité tournée vers l'espace de combustion (15) dans sa région périphérique extérieure en outre au moins une ouverture d'introduction supplémentaire (47) pour introduire le gaz de fumée (E) hors de l'espace de combustion (15) dans l'espace intérieur (46) du secteur de transfert de chaleur (40) traversé par les tubes d'air de processus (43).

3. Brûleur à récupération selon la revendication 1 ou 2, présentant en outre un tube de flamme (50) qui est prévu sur le côté de l'élément de support (42) du secteur de transfert de chaleur (40) opposé à l'espace intérieur (46), afin d'introduire l'air de processus (A) par le biais du tube de flamme (50) dans l'espace de combustion (15), le tube de gaz de fumée (60) s'étendant à travers le tube de flamme (50) et à travers l'élément de support (42) du secteur de transfert de chaleur (40) dans le secteur de transfert de chaleur (40).

4. Brûleur à récupération selon l'une des revendications 1 à 3, dans lequel le tube de gaz de fumée (60) ne fait saillie que le long d'une section partielle dans le secteur de transfert de chaleur (40) et présente une paroi d'extrémité de tube fermée (66).

5. Brûleur à récupération selon l'une des revendications 1 à 3, dans lequel
le tube de gaz de fumée (60) s'étend à travers l'ensemble du secteur de transfert de chaleur (40) jusqu'au répartiteur d'entrée (41) et présente une paroi d'extrémité de tube fermée (66),
au moins une de l'au moins une ouverture de paroi de tube (63) pour introduire le gaz de fumée (E) dans l'espace intérieur (46) du secteur de transfert de chaleur (40) est disposée dans la moitié du secteur de transfert de chaleur (40) tournée vers le secteur de raccordement (30), et
le secteur de transfert de chaleur (40) présente dans sa région d'extrémité tournée vers le secteur de raccordement (30) sur sa périphérie extérieure au moins une ouverture de sortie (48), qui est couplée à l'au moins un canal de sortie de gaz de fumée (38).

6. Brûleur à récupération selon l'une des revendications 1 à 3, dans lequel le tube de gaz de fumée (60) s'étend à travers l'ensemble du secteur de transfert de chaleur (40) et à travers le répartiteur d'entrée (41),
le tube de gaz de fumée (60) présente entre la région de l'élément de support (42) et la région du répartiteur d'entrée (41) une paroi de séparation de tube (67), afin de former une section d'introduction (67a) tournée vers l'élément de support (42) et une section d'évacuation (67b) tournée vers le répartiteur d'entrée (41), la section d'évacuation (67b) étant couplée à l'au moins un canal de sortie de gaz de fumée (38),
l'au moins une ouverture de paroi de tube (63) pour introduire le gaz de fumée (E) dans l'espace intérieur (46) du secteur de transfert de chaleur (40) est disposée dans la section d'introduction (67a), et
le tube de gaz de fumée (60) présente dans sa section d'évacuation (67b) au moins une autre ouverture de paroi de tube (64) pour évacuer le gaz de fumée (E) hors de l'espace intérieur (46) du secteur de transfert de chaleur (40) dans le tube de gaz de fumée (60).

7. Brûleur à récupération (20) selon l'une des revendications précédentes, présentant en outre :
(i) au moins un actionneur (81), qui est conçu et disposé pour bloquer au choix au moins quelque peu le canal de sortie de gaz de fumée (38) ; et/ou
(ii) au moins un actionneur (82), qui est conçu et disposé pour bloquer au choix au moins quelque peu au moins un de l'au moins un tube de gaz de fumée (60).

8. Brûleur à récupération (20) selon l'une des revendications précédentes, présentant en outre :
(iii) au moins un variateur (84), qui est conçu et disposé pour restreindre au choix au moins quelque peu l'accès à au moins une de l'au moins une ouverture de paroi de tube (63) du tube de gaz de fumée (60) ; et/ou
(iv) au moins un variateur (85), qui est conçu et disposé pour restreindre au choix au moins quelque peu l'accès à au moins une de l'au moins une autre ouverture de paroi de tube (64) du tube de gaz de fumée (60) ; et/ou
(v) au moins un variateur (86), qui est conçu et disposé pour restreindre au choix au moins quelque peu l'accès à au moins une de l'au moins une ouverture d'introduction supplémentaire (47) dans l'espace intérieur (46) du secteur de transfert de chaleur (40) ; et/ou
(vi) au moins un variateur (88), qui est conçu et disposé pour ouvrir au choix au moins quelque peu la paroi de séparation de tube (67) entre la section d'introduction (67a) et la section d'évacuation (67b) du tube de gaz de fumée (60).

9. Brûleur à récupération (20) selon l'une des revendications précédentes, dans lequel le secteur de transfert de chaleur (40) présente à un endroit entre l'élément de support (42) et le répartiteur d'entrée (41) sur sa périphérie extérieure au moins une ouverture d'évacuation (70) pour évacuer une partie du gaz de fumée (E) hors de l'espace intérieur (46) du secteur de transfert de chaleur (40) dans un canal d'évacuation de gaz de fumée (71), l'ouverture d'évacuation (70) étant de préférence équipée d'un régulateur de débit (72) pour régler au choix une quantité d'évacuation de gaz de fumée.

10. Brûleur à récupération (20) selon l'une des revendications précédentes, dans lequel le secteur de transfert de chaleur (40) contient dans son espace intérieur (46) plusieurs tôles de déviation (49), qui sont orientées à chaque fois transversalement aux tubes d'air de processus (43) et qui présentent à chaque fois des ouvertures de passage pour le passage des tubes d'air de processus (43), les plusieurs tôles de déviation (49) étant espacées les unes des autres dans la direction de déplacement des tubes d'air de processus (43) et étant décalées les unes par rapport aux autres dans la direction transversale à la direction de déplacement des tubes d'air de processus (43).

11. Brûleur à récupération (20) selon l'une des revendications précédentes, dans lequel le secteur de raccordement (30) présente en outre au moins un canal d'entrée de combustible (31) pour recevoir un combustible (B) et un espace de prémélange (35) pour mélanger l'air de processus (A) et le combustible (B) en un mélange d'air de combustion (C), les tubes d'air de processus (43) du secteur de transfert de chaleur (40) étant couplés à travers le répartiteur d'entrée (41) à l'espace de prémélange (35), afin de guider le mélange d'air de combustion (C) du secteur de raccordement (30) à l'espace de combustion (15), le secteur de raccordement (30) présentant de préférence en outre au moins un dispositif de détection de température (39a) pour détecter une température du mélange d'air de combustion (C) dans l'espace de prémélange (35).

12. Brûleur à récupération (20) selon l'une des revendications précédentes, dans lequel
le secteur de raccordement (30) présente en outre au moins un canal d'entrée de combustible (31) pour recevoir un combustible (B), et
le brûleur (20) présente en outre au moins un tube de combustible (44a, 44b), qui est couplé à l'au moins un canal d'entrée de combustible (31) et s'étend entre les tubes d'air de processus (43) ou à l'intérieur d'un tube d'air de processus (43) à travers l'espace intérieur (46) du secteur de transfert de chaleur (40), afin de guider le combustible (B) séparément de l'air de processus (A) du secteur de raccordement (30) à l'espace de combustion (15).

13. Brûleur à récupération (20) selon l'une des revendications précédentes, dans lequel
le secteur de raccordement (30) présente en outre au moins un canal d'entrée d'additif (36) pour recevoir un additif (D), et
le brûleur (20) présente en outre au moins un tube d'additif (45), qui est couplé à l'au moins un canal d'entrée d'additif (36) et s'étend à côté des tubes d'air de processus (43) à travers le secteur de transfert de chaleur (40), afin de guider en plus de l'air de processus (A) un additif (D) dans la chambre de combustion (12).

14. Brûleur à récupération (20) selon l'une des revendications précédentes, dans lequel les tubes d'air de processus (43) sont conçus à chaque fois de manière rétrécie au niveau de leur extrémité tournée vers l'espace de combustion (15) et/ou sont couplés de manière lâche dans l'élément de support (42) du secteur de transfert de chaleur (40) et/ou au moins une quantité partielle des tubes d'air de processus (43) présente un stabilisateur de flamme.

15. Brûleur à récupération (20) selon l'une des revendications précédentes, dans lequel le tube de flamme (50) et/ou le tube de gaz de fumée (60) présentent des parois périphériques extérieures, qui sont conçues et orientées de telle sorte que l'espace enfermé par le tube de flamme (50) soit élargi dans la direction allant de l'élément de support (42) du secteur de transfert de chaleur (40) vers l'espace de combustion (15).

16. Brûleur à récupération (20) selon l'une des revendications précédentes, dans lequel l'élément de support (42) du secteur de transfert de chaleur (40) présente à côté des tubes d'air de processus (43) au moins une ouverture supplémentaire, dans laquelle est disposé un dispositif de torsion (53) pour le renvoi oblique de gaz (A, C, E) hors de l'espace intérieur (46) du secteur de transfert de chaleur (40) dans le tube de flamme (50).

17. Brûleur à récupération (20) selon l'une des revendications précédentes, dans lequel le secteur de raccordement (30) présente au moins un dispositif de soupape (32, 34, 36) pour ouvrir ou fermer au choix un canal d'entrée respectif (31, 33, 37).

18. Brûleur à récupération (20) selon l'une des revendications précédentes, présentant en outre un dispositif de mesure de pression différentielle sur le secteur de transfert de chaleur (40).

19. Brûleur à récupération (20) selon l'une des revendications précédentes, dans lequel le secteur de transfert de chaleur (40) se compose de plusieurs segments de secteur de transfert de chaleur (40n), les plusieurs segments de secteur de transfert de chaleur (40n) contenant à chaque fois au moins un tube de gaz de fumée (60) et/ou au moins un tube de gaz de fumée (60) étant disposé entre au moins deux segments de secteur de transfert de chaleur (40n).

20. Dispositif de traitement d'air de processus thermique (10), présentant :
une chambre de combustion (12) qui présente dans celle-ci un espace de combustion (15) pour le traitement thermique d'un air de processus ; et
au moins un brûleur à récupération (20) pour introduire l'air de processus à traiter (A) dans l'espace de combustion (15) et pour évacuer un gaz de fumée (E) produit par le traitement thermique de l'air de processus (A) hors de l'espace de combustion (15) avec un transfert de chaleur du gaz de fumée évacué (E) à l'air de processus introduit (A),
l'au moins un brûleur à récupération (20) étant un brûleur à récupération (20) selon l'une des revendications précédentes.

21. Dispositif de traitement d'air de processus thermique (10) selon la revendication 20, qui présente plusieurs brûleurs à récupération (20) qui peuvent être commandés indépendamment les uns des autres.

22. Dispositif de traitement d'air de processus thermique (10) selon la revendication 20 ou 21, dans lequel la chambre de combustion (12) présente au moins un dispositif de chauffage (18) pour l'alimentation de l'espace de combustion en énergie thermique.

23. Procédé (170) pour faire fonctionner un brûleur à récupération (20) selon l'une des revendications 1 à 19, en particulier dans un dispositif de traitement d'air de processus thermique (10) selon l'une des revendications 20 à 22, présentant au moins les étapes suivantes :
introduction (171) d'un air de processus à traiter (A) par le brûleur à récupération (20) dans l'espace de combustion (15) de la chambre de combustion (12) ;
traitement thermique (173) de l'air de processus introduit (A) dans l'espace de combustion (15) avec formation d'un gaz de fumée (E) ; et
évacuation (174) du gaz de fumée (E) par le tuyau de gaz de fumée (60) hors de l'espace de combustion (15) et par le brûleur à récupération (20) avec transfert de chaleur à l'air de processus introduit (A) et par le canal de sortie de gaz de fumée (38).
